(19) 【Europäisches Patentamt / European Patent Office / Office européen des brevets】

(11) **EP 4 467 303 A1**

(12) **EUROPEAN PATENT APPLICATION**

(43) Date of publication:
**27.11.2024  Bulletin 2024/48**

(21) Application number: **23305823.9**

(22) Date of filing: **23.05.2023**

(51) International Patent Classification (IPC):
**B27N 1/00** (2006.01)     **B27N 1/02** (2006.01)
**B27N 3/00** (2006.01)     **B27N 3/02** (2006.01)
**C08L 97/02** (2006.01)     **C08G 73/02** (2006.01)
**C08K 5/053** (2006.01)     **C08L 79/02** (2006.01)
**C09J 189/00** (2006.01)

(52) Cooperative Patent Classification (CPC):
(C-Sets available)
**B27N 1/0209; B27N 1/00; B27N 1/029;**
**B27N 3/002; B27N 3/02;** C08G 73/0286;
C08K 5/053; C08L 79/02     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **EVERTREE
60280 Venette (FR)**

(72) Inventor: **The designation of the inventor has not
yet been filed**

(74) Representative: **Santarelli
Tour Trinity
1 bis Esplanade de la Défense
92035 Paris La Défense Cedex (FR)**

(54) **PROCESS TO PREPARE A MULTI-LAYER LIGNOCELLULOSIC-BASED ARTICLE USING DIFFERENT TWO-PART ADHESIVE COMPOSITIONS**

(57)     The present invention relates to a process for preparing a multi-layer lignocellulosic article comprising a core and two surface layers, wherein this process comprises the use of a two-part adhesive compositions comprising a solid part comprising a ground sunflower or rapeseed meal and a liquid part comprising a cross-linker and wherein an amine- or amide-based compound is added and mixed to the lignocellulosic material forming the core layer.

Fig. 1

**Internal Bonding**

IB (N/mm²) vs Press factor (s/mm)
Test 1 — Test 2 — Test 3

**Thickness Swelling after 24h in water**

TS 24h (%) vs Press factor (s/mm)
Test 1 — Test 2 — Test 3

EP 4 467 303 A1

**Fig. 1 (continued)**

Modulus of Rupture

Modulus of Elasticity

(52) Cooperative Patent Classification (CPC): (Cont.)

C-Sets
**C09J 189/00, C08K 5/053;**
**C09J 189/00, C08L 79/02;**
**C09J 199/00, C08K 5/053;**
**C09J 199/00, C08L 79/02**

**Description**

**Field of the Invention**

The present invention relates to a process for preparing (manufacturing) a multi-layer lignocellulosic article comprising a core (inner) and two surface (outer) layers. This process comprises the use of two two-part adhesive compositions comprising a solid part comprising a ground sunflower or rapeseed meal and a liquid part comprising a cross-linker. These two separate parts of the adhesive composition are added separately or concomitantly to the lignocellulosic material in the process of the invention. These two adhesive compositions present a different composition.

**Background of the Invention**

Multi-layer lignocellulosic articles, such as wood-based composite materials, include at least one lignocellulosic core (or intermediate) layer sandwiched between two lignocellulosic surface (or face) layers which are one upper lignocellulosic surface layer and at least one lower lignocellulosic surface layer. The density and the structure of the lignocellulosic layers can be identical or different. The lignocellulosic layers can respectively be made of identical or different lignocellulosic materials such as straw, paper, cardboard, wood strands and/or wood particles. The orientation of the lignocellulosic materials forming the layers can respectively be identical or different, for example oriented longitudinally or transversally. Also, the size of the lignocellulosic materials forming the layers can respectively be identical or different. For example, wood particleboards are manufactured with three different layers; one core layer with large wood particles (average particles width approximately between 1 to 5 mm) representing around 50 to 80% of the panel, and two surface layers, located on each side of the core layer, with smaller wood particles (average particles width approximately below 1 mm) representing 20 to 50% of the panel. Wood particles have an average aspect ratio (length:width) of greater than 1:1. The wood particles used in the surface layer have a smaller average particle size than wood particles used in the core layer.

Processes for manufacturing multi-layer lignocellulosic articles, such as particleboards or oriented strand boards, are well known in the art as described in Wood-Based Panels: An Introduction for Specialists, 2010, Edited by H. Thoemen, M. Irle and M. Sernek, published by Brunel University Press, London, UB8 3PH. England.

International application WO2016/141126 discloses a process for preparing lignocellulosic-based composites, which are bonded with an adhesive composition comprising a protein source and a curing (cross-linking) agent, namely a polyamidoamine-epichlorohydrin (PAE) resin. This process consists in combining a lignocellulosic material (wood furnish) with a liquid composition comprising PAE resin, urea, glycerol and water then adding a powdered protein source (soy flour) to the mixture before curing (Example 1b of WO2016/141126). An alternative process disclosed in WO2016/141126 (Example 1c) consists in mixing the powdered protein source (soy flour) with the lignocellulosic material (wood furnish) before spraying said liquid composition onto the mixture (soy flour + wood furnish).

As illustrated in Example 5 of WO2016/141126, the presence of urea in the liquid composition is an essential feature for improving the strength of the lignocellulosic-based composite thus prepared. Even though this process using dry soy flour delays the release of ammonia, it remains a problem during the process, namely strong odor and eye irritation. One solution is to heat-treat the soy flour to denature the urease (which is an additional and energy consuming step) or to use a soy protein isolate (which is an expensive solution). However, this solution may lead to lignocellulosic-based composites (e.g., wood boards) having lower strength compared to the lignocellulosic-based composites made with non-treated soy flour.

International application WO2021/069689, published in the name of the Applicant, discloses a process for the manufacture of a lignocellulosic fiber-based composite material, such as a medium-density fiberboard (MDF), comprising the steps of i) obtaining a fibrous mix comprising a defibrated lignocellulosic material and a defibrated plant seed meal, ii) blending the fibrous mix with a resin to form a composite mixture, and iii) curing the composite mixture, thereby forming the lignocellulosic fiber-based composite material. The plant seed meal which is defibrated (but not micronized) can be sunflower or rapeseed meal. Defibrated plant seed meal generally has a particle size (D50) of more than 400 $\mu$m. This document does not relate to the manufacture of other materials than lignocellulosic fiber-based composite materials, in particular does not relate to the manufacture of oriented strand board (OSB) or particleboard. The process disclosed in WO2021/069689 cannot be applied to the manufacture of OSB or particleboard because during the industrial manufacture of OSB or particleboard, there are technical constraints to the mixing of wood chips/particles with wood fibers that cause, for example, the clogging of nozzles. Recycling used MDF is also an issue since MDF cannot be re-used for the manufacture of OSB and particleboards (used MDF panels are usually buried as waste).

**Invention Summary**

The inventors have surprisingly found that when using a ground sunflower or rapeseed meal-based adhesive instead of a soy flour-based adhesive, no urease activity is observed. Thus, the use of ground sunflower or rapeseed meal-based adhesives is an advantageous alternative to soy flour-based adhesives.

The inventors have also found that during the manufacture of a multi-layer lignocellulosic-based article, the use of a two-part adhesive composition comprising a solid part comprising ground sunflower or rapeseed meal, and a liquid part comprising an amine-based azetidinium-functional cross-linker enables to limit water addition from the adhesive composition compared to a single-part liquid adhesive composition in which all the compounds are mixed together, without compromising the properties of the manufactured lignocellulosic-based article. Indeed, a single-part protein-based liquid adhesive composition shows several limitations, such as high viscosity and/or addition of high quantity of water that is an issue during the hot press (curing) step to manufacture a lignocellulosic-based article. Therefore, the benefit of using a two-part adhesive composition comes to separating the liquid and solid parts of the adhesive composition and avoiding a mixing step of all the different parts of the adhesive composition. Also, reducing the amount of water, while retaining a low-viscosity liquid part, desirably reduces the risk that a lignocellulosic-based article bound with such a two-part adhesive composition is damaged by steam generated during the curing step of the lignocellulosic material impregnated with the adhesive composition at high temperature.

In addition, the inventors have found that during the manufacturing process of a multi-layer lignocellulosic-based article using such two two-part adhesive compositions, one for resinating the lignocellulosic material forming the surface layers and the other one for resinating lignocellulosic material forming the core layer in which an amine- or amide-based compound (such as urea) is added increases internal bonding properties of the manufactured multi-layer lignocellulosic board while maintaining the water resistance and the flexural moduli of multi-layer wood particleboards.

Therefore, the invention relates to a process for preparing a multi-layer lignocellulosic-based article comprising a core layer and two surface layers, each layer comprising or consisting of lignocellulosic material, comprising:

i) providing

i.a) a first two-part adhesive composition having

- a first liquid part comprising an amine-based azetidinium-functional cross-linker, water, and optionally an amine- or amide-based compound (preferably urea) and/or a diluent (preferably a polyol),
- a first solid part comprising ground *Helianthus* meal or ground *Brassica* meal or a mixture thereof and optionally an amine- or amide-based compound (preferably urea),

i.b) a second two-part adhesive composition having

- a second liquid part comprising an amine-based azetidinium-functional cross-linker, water, and optionally a diluent (preferably a polyol),
- a second solid part comprising ground *Helianthus* meal or ground *Brassica* meal or a mixture thereof,

ii) resinating the lignocellulosic material forming the core layer, by adding the first liquid part and the first solid part to a lignocellulosic material, simultaneously or sequentially in any order of addition, to provide a lignocellulosic material impregnated with the first adhesive composition
provided that if neither the first liquid part nor the first solid phase comprises an amine- or amide-based compound, an amine- or amide-based compound (preferably urea) is added to the lignocellulosic material during step ii);
iii) resinating the lignocellulosic material forming the surface layers, by adding the second liquid part and the second solid part to a lignocellulosic material, simultaneously or sequentially in any order of addition, to provide a lignocellulosic material impregnated with the second adhesive composition,
iv) forming a mat with the lignocellulosic material forming the core layer impregnated with the first adhesive composition and the lignocellulosic material forming the two surface layers impregnated with the second adhesive composition,
v) curing the adhesive compositions impregnating the lignocellulosic material forming the core layer and the lignocellulosic material forming the surface layers whereby a multi-layer lignocellulosic-based article comprising a core layer and two surface layers is obtained.

In the present invention, the lignocellulosic material forming the core layer is impregnated by a first adhesive composition which comprises an amine- or amide-based compound (preferably urea). This amine- or amide-based compound (preferably urea) can be present

- in the liquid part of the first adhesive composition,
- in the solid part of the first adhesive composition,

- in both the liquid part and the solid part of the first adhesive composition, preferably in the liquid part of the first adhesive composition.

If the amine- or amide-based compound (preferably urea) is not present in the solid part and the liquid part of the first adhesive composition, then said compound has to be added while adding to the lignocellulosic material the first liquid part and the solid liquid part. This addition can be performed in different ways: before, during or after adding the first liquid part and before, during or after adding the first solid part. When added, the amine- or amide-based compound (preferably urea) is in liquid form. Alternatively, this compound is in solid form.

Advantageously, the amine- or amide-based compound (preferably urea) is present in the liquid part and/or in the solid part of the first adhesive composition. Therefore, the invention relates to a process for preparing a multi-layer lignocellulosic-based article comprising a core layer and two surface layers, each layer comprising or consisting of lignocellulosic material, comprising:

i) providing

i.a) a first two-part adhesive composition having

- a first liquid part comprising an amine-based azetidinium-functional cross-linker, water, and optionally a diluent (preferably a polyol),
- a first solid part comprising ground *Helianthus* meal or ground *Brassica* meal or a mixture thereof, the first liquid part and/or the first solid part further comprising an amine- or amide-based compound (preferably urea),

i.b) a second two-part adhesive composition having

- a second liquid part comprising an amine-based azetidinium-functional cross-linker, water, and optionally a diluent (preferably a polyol),
- a second solid part comprising ground *Helianthus* meal or ground *Brassica* meal or a mixture thereof,

ii) resinating the lignocellulosic material forming the core layer, by adding the first liquid part and the first solid part to a lignocellulosic material, simultaneously or sequentially in any order of addition, to provide a lignocellulosic material impregnated with the first adhesive composition,
iii) resinating the lignocellulosic material forming the surface layers, by adding the second liquid part and the second solid part to a lignocellulosic material, simultaneously or sequentially in any order of addition, to provide a lignocellulosic material impregnated with the second adhesive composition,
iv) forming a mat with the lignocellulosic material forming the core layer impregnated with the first adhesive composition and the lignocellulosic material forming the two surface layers impregnated with the second adhesive composition,
v) curing the adhesive compositions impregnating the lignocellulosic material forming the core layer and the lignocellulosic material forming the surface layers whereby a multi-layer lignocellulosic-based article comprising a core layer and two surface layers is obtained.

In an embodiment of the invention, the process for preparing a multi-layer lignocellulosic-based article comprising a core layer and two surface layers, each layer comprising or consisting of lignocellulosic material, comprises:

i) providing

i.a) a first two-part adhesive composition having

- a first liquid part comprising an amine-based azetidinium-functional cross-linker, water, and optionally a diluent (preferably a polyol),
- a first solid part comprising ground *Helianthus* meal or ground *Brassica* meal or a mixture thereof, the first liquid part and/or the first solid part further comprising an amine- or amide-based compound (preferably urea),

i.b) a second two-part adhesive composition having

- a second liquid part comprising an amine-based azetidinium-functional cross-linker, water, and optionally a diluent (preferably a polyol),
- a second solid part comprising ground *Helianthus* meal or ground *Brassica* meal or a mixture thereof,

ii) resinating the lignocellulosic material forming the core layer, by:

ii.a) adding either the first liquid part or the first solid part to the lignocellulosic material to provide a mixture, then
ii.b) adding the remaining first liquid part or the remaining first solid part to the mixture to provide a lignocellulosic material impregnated with the first adhesive composition,

iii) resinating the lignocellulosic material forming the surface layers, by:

iii.a) adding either the second liquid part or the second solid part to the lignocellulosic material to provide a mixture, then
ii.b) adding the remaining second liquid part or the remaining second solid part to the mixture to provide a lignocellulosic material impregnated with the second adhesive composition,

iv) forming a mat comprising the lignocellulosic material forming the core layer impregnated with the first adhesive composition and the lignocellulosic material forming the two surface layers impregnated with the second adhesive composition,

v) curing the adhesive compositions impregnating the lignocellulosic material forming the core layer and the lignocellulosic material forming the surface layers whereby a multi-layer lignocellulosic-based article comprising a core layer and two surface layers is obtained.

In a particular embodiment, if an amine- or amide-based compound is also added and mixed to the lignocellulosic material forming the surface layers, then the content of amine- or amide-based compound added to the lignocellulosic material forming the core layer is superior to (preferably at least 1.5 times superior to) the content of amide-based compound to each of the lignocellulosic material forming the surface layers.

According to this particular embodiment, the amine- or amide-based compound added to the lignocellulosic material forming the core layer can be identical or different to the amine- or amide-based compound added to the lignocellulosic material forming the surface layers.

Advantageously according to this particular embodiment, this amine- or amide-based compound (preferably urea) can be present

- in the liquid part of the second adhesive composition,
- in the solid part of the second adhesive composition,
- in both the liquid part and the solid part of the second adhesive composition, preferably in the liquid part of the second adhesive composition.

Thus the second liquid part and/or the second solid part and preferably the second liquid part can comprise an amine- or amide-based compound, identical or different to the one present in the first adhesive composition.

In other words, if the second liquid part and/or the second solid part and preferably the second liquid part comprise(s) an amide- or amide-based compound, identical or different to the one present in the first adhesive composition, the content of the amine- or amide-based compound of the first adhesive composition is superior to (preferably at least 1.5 times superior to) the content of amine- or amide-based compound of the second adhesive composition.

If the amine- or amide-based compound (preferably urea) is not present in the solid part and the liquid part of the second adhesive composition, then said compound has to be added while adding to the lignocellulosic material the second liquid part and the solid liquid part. This addition can be performed in different ways: before, during or after adding the second liquid part and before, during or after adding the second solid part. When added, the amine- or amide-based compound (preferably urea) is in liquid form. Alternatively, this compound is in solid form.

In a preferred embodiment of the invention no amine- or amide-based compound is added and mixed to the lignocellulosic material forming the surface layers. Thus, neither the second liquid part, nor the second solid part comprises an amine- or amide-based compound.

In another preferred embodiment of the invention the multi-layer lignocellulosic-based article is a three-layer lignocellulosic-based article.

By "liquid part", it is intended a phase which is liquid under normal temperature and pressure (i.e., 20°C and 1 atm).

Any liquid part implemented in the invention can be a liquid-liquid solution wherein the liquids are miscible in water, at 20°C and 1 atm. The liquid part can also be a solid-liquid solution wherein the solids (*e.g.* cross-linker, urea) have a solubility in water of at least 95%, preferably at least 98%, more preferably 100%, at 20°C and 1 atm.

The liquid parts are not an emulsion.

Consequently, the first liquid part and the second liquid part can be in an identical or different form and in particular selected from a solution and a dispersion.

Advantageously, the viscosity at 20°C of the first liquid part and of the second liquid part can be identical or different. In particular, the viscosity at 20°C of the first liquid part and the second liquid part is less than 1000 mPa.s, preferably, less than 500 mPa.s, more preferably, less than 400 mPa.s and, even more preferably, less than 300 mPa.s. Such an advantageous viscosity allows the liquid parts to be sprayable, in particular at the industrial scale.

The skilled person knows how to measure viscosity of a liquid composition. Preferably, the viscosity can be measured as described in Example 1.

By "amine-based azetidinium-functional cross-linker", it is meant a cross-linker comprising amine and azetidinium groups.

By "cross-linker", it is meant a compound or mixture of compounds comprising reactive groups.

The amine-based azetidinium-functional cross-linker present in the first liquid part and the one present in the second liquid part can be identical or different, preferably identical.

Advantageously, in the process for preparing a multi-layer lignocellulosic-based article according to the invention, the amine-based azetidinium-functional cross-linker present in the first liquid part or in the second liquid part is an epichlorohydrin-based cross-linker. More advantageously, in the process for preparing a multi-layer lignocellulosic-based article according to the invention, the amine-based azetidinium-functional cross-linker present in the first liquid part and in the second liquid part is an epichlorohydrin-based cross-linker.

By "epichlorohydrin-based cross-linker", it is meant a cross-linker obtained from reacting epichlorohydrin.

Preferably, the amine-based azetidinium-functional cross-linker in the first liquid part or in the second liquid part is a polyamidoamine-epichlorohydrin (PAE), a polyalkylenepolyamine-epichlorohydrin (PAPAE), an amine polymer-epichlorohydrin (APE), or a combination thereof. More preferably, the amine-based azetidinium-functional cross-linker in the first liquid part and in the second liquid part is a polyamidoamine-epichlorohydrin (PAE), a polyalkylenepolyamine-epichlorohydrin (PAPAE), an amine polymer-epichlorohydrin (APE), or a combination thereof. Even more preferably, this epichlorohydrin-based cross-linker is a polyamidoamine-epichlorohydrin (PAE).

The diluent present in the first liquid part and the one present in the second liquid part can be identical or different, preferably identical.

Advantageously, the diluent present in the first liquid part and the one present in the second liquid part, identical or different, preferably identical, are selected from the group consisting of polyols and alcohol-based- or amine-based diluents, preferably both diluents are a polyol, identical or different, preferably identical.

Preferably, the alcohol-based- or amine-based diluent is mono-, di- or tri-ethanolamine.

Preferably the polyol is selected from the group consisting of glycerol, crude vegetable glycerin, propylene glycol, ethylene glycol, alkyl and aryl derivatives of glycerol, alkyl and aryl derivatives of propylene glycol, alkyl and aryl derivatives of ethylene glycol, carbohydrate sugars and other polyols such as glucose, fructose, sorbitol, isosorbide, maltitol, mannitol, and erythritol, and/or from the group consisting of oligomers and polymers of any of the earlier listed monomers such as polyglycerols, polyethylene glycol (PEG) polypropylene glycols (PPG), glucose syrups, maltodextrins, dextrins, modified starches, mono-, di or tri-ethanol and mixtures thereof.

More preferably, the polyol is selected from the group consisting of glycerol, crude vegetable glycerin, propylene glycol, ethylene glycol, carbohydrate sugars and other polyols such as glucose, fructose, sorbitol, maltitol, mannitol, and erythritol and/or from the group consisting of oligomers and polymers of any of the earlier listed monomers such as polyglycerols, polyethylene glycol (PEG) polypropylene glycols (PPG), glucose syrups, even more preferably, glycerol or crude vegetable glycerin.

It should be noted that some of the above-listed diluents are solid under normal temperature and pressure (i.e., 20°C and 1 atm). Nevertheless they can act as diluents as soon as dissolved in the liquid part.

One benefit of using glycerol and various low-viscosity polyols is that they allow less water to be used in the adhesive composition.

Amine- or amide-based compounds are described in the literature and are contemplated to be amenable to the present invention. These compounds present at least one amine group and/or at least one amide group. Different amine- or amide-based compounds have different reactivity profiles, and a amine- or amide-based compound (e.g., $H_2NC(O)NH_2$, $Me_2NC(O)NH_2$, or $CH_3CH_2NH_2$) can be selected to optimize the performance properties of the adhesive composition and/or binder composition formed by the adhesive. Accordingly, in certain embodiments, the amine- or amide-based compound present in the first adhesive composition and optionally in the second adhesive composition has the formula $RNH_2$, $R_2NH$, $RC(O)NH_2$, $R(H)C(O)NH_2$, $R_2NC(O)NH_2$, or $R(H)C(O)N(H)R$, wherein R represents independently for each occurrence H, alkyl, aryl, or aralkyl. In certain embodiments, the amine- or amide-based compound has the formula $RN(H)C(O)N(H)R$, wherein R represents independently for each occurrence H, alkyl, aryl, or aralkyl. In certain other embodiments, the amine- or amide-based compound is $H_2NC(O)NH_2$, $H_2NC(O)N(H)Me$,

MeN(H)C(O)N(H)Me, $H_2NC(O)N(CH_3)_2$, $CH_3C(O)NH_2$, $CH_3CH_2C(O)NH_2$, $CH_3NH_2$, $CH_3CH_2NH_2$, $(CH_3)_2NH$ or $(CH_3CH_2)_2NH$.

The term "alkyl" as used herein refers to a saturated linear or branched hydrocarbon, such as a linear or branched group of 1-12, 1-10, or 1-6 carbon atoms, referred to herein as $C_1$-$C_{12}$ alkyl, $C_1$-$C_{10}$ alkyl, and $C_1$-$C_6$, alkyl, respectively. Exemplary alkyl groups include, but are not limited to, methyl, ethyl, propyl, isopropyl, 2-methyl-1-propyl, 2-methyl-2-propyl, 2-methyl-1-butyl, 3-methyl-1-butyl, 2-methyl-3-butyl, 2,2-dimethyl-1-propyl, 2-methyl-1-pentyl, 3-methyl-1-pentyl, 4-methyl-1-pentyl, 2-methyl-2-pentyl, 3-methyl-2-pentyl, 4-methyl-2-pentyl, 2,2-dimethyl-1-butyl, 3,3-dimethyl-1-butyl, 2-ethyl-1-butyl, butyl, isobutyl, t-butyl, pentyl, isopentyl, neopentyl, hexyl, heptyl, octyl, etc.

The term "aryl" as used herein refers to refers to a mono-, bi-, or other multi-carbocyclic, aromatic ring system. Unless specified otherwise, the aromatic ring is optionally substituted at one or more ring positions with substituents selected from alkanoyl, alkoxy, alkyl, alkenyl, alkynyl, amido, amidino, amino, aryl, arylalkyl, azido, carbamate, carbonate, carboxy, cyano, cycloalkyl, ester, ether, formyl, halogen, haloalkyl, heteroaryl, heterocyclyl, hydroxyl, imino, ketone, nitro, phosphate, phosphonate, phosphinate, sulfate, sulfide, sulfonamide, sulfonyl and thiocarbonyl. The term "aryl" also includes polycyclic ring systems having two or more cyclic rings in which two or more carbons are common to two adjoining rings (the rings are "fused rings") wherein at least one of the rings is aromatic, *e.g.*, the other cyclic rings may be cycloalkyls, cycloalkenyls, cycloalkynyls, and/or aryls. Exemplary aryl groups include, but are not limited to, phenyl, tolyl, anthracenyl, fluorenyl, indenyl, azulenyl, and naphthyl, as well as benzo-fused carbocyclic moieties such as 5,6,7,8-tetrahydronaphthyl. In certain embodiments, the aryl group is not substituted, *i.e.*, it is unsubstituted.

The term "aralkyl" as used herein refers to an aryl group having at least one alkyl substituent, *e.g.* aryl-alkyl-. Exemplary aralkyl groups include, but are not limited to, arylalkyls having a monocyclic aromatic ring system, wherein the ring comprises 6 carbon atoms. For example, "phenylalkyl" includes phenylC4 alkyl, benzyl, 1-phenylethyl, 2-phenylethyl, etc.

Preferably, the amine- or amide-based compound present in the first adhesive composition and optionally in the second adhesive composition is a monomer, more preferably $H_2NC(O)NH_2$ (urea) or hexamethylenetetramine (also known as hexamine), most preferably urea.

The amount of amine- or amide-based compound in the first adhesive composition and optionally in the second adhesive composition can be adjusted to optimize the performance properties of these adhesive compositions and/or binder compositions formed by the adhesives. In certain embodiments, the mass ratio of amine- or amide-based compound to amine-based azetidinium-functional cross-linker is at least about 0.1:1, at least about 0.5:1, at least about 1:1, at least about 2:1, at least about 3:1, at least about 4:1 or at least about 5:1. In certain embodiments, the mass ratio of amine- or amide-based compound to amine-based azetidinium-functional cross-linker is in the range of from about 0.01:1 to about 0.5:1, from about 0.5:1 to about 5:1, or from about 1:1 to about 4:1. In still other embodiments, the mass ratio of amine- or amide-based compound to amine-based azetidinium-functional cross-linker is at least 0.05:1. In still other embodiments, the mass ratio of amine- or amide-based compound to amine-based azetidinium-functional cross-linker is at least 5:1. It is clear that the amount of amine- or amide-based compound in mass corresponds to the sum of the amount of amine- or amide-based compound present in the first adhesive composition in mass with, if present, the amount of amine- or amide-based compound present in the second adhesive composition in mass.

In certain embodiments, the amine- or amide-based compound is present in an amount from about 1% to about 50% (w/w), from about 1% to about 30% (w/w), from about 1% to about 20% (w/w), from about 5% to about 50% (w/w), from about 5% to about 30% (w/w), from about 5% to about 20% (w/w), from about 10% to about 50% (w/w), from about 10% to about 30% (w/w) or from about 10% to about 20% (w/w) of the first adhesive composition. In certain other embodiments, the amine- or amide-based compound is present in an amount from about 1% to about 50% (w/w) of the first adhesive composition. In still other embodiments, the amine- or amide-based compound is present in an amount from about 2% to about 30% (w/w) of the first adhesive composition.

Preferably, the amine- or amide-based compound (preferably urea) is included in the liquid part and/or the solid part of the first two-part adhesive composition, more preferably in the liquid part. Moreover, when the second two-part adhesive composition comprises an amine- or amide-based compound (preferably urea), the latter can be included in the liquid part and/or the solid part of the second two-part adhesive composition, more preferably it is included in the liquid part.

The pH value of the first liquid part and the one of the second liquid part can be identical or different.

Advantageously, the pH value of the first liquid part and the pH value of the second liquid part, identical or different, are comprised between 2 and 12, preferably between 4 and 11, more preferably, between 5 and 9. Thanks to the components contained in the liquid parts of the two adhesive compositions, the latter can "naturally" present a pH in the above-defined ranges *i.e.*, without requesting any adjustment. Alternatively, the pH of the liquid parts of the adhesive compositions may be adjusted, in particular, depending on the optimum pH of the amine-based azetidinium-functional cross-linker. For example, the pH value of the liquid parts of the adhesive compositions is superior to 6, preferably superior to 7 and more preferably comprised between 8 and 11, for example about 8.

By "solid part", it is intended a phase which is solid under normal temperature and pressure (*i.e.*, 20°C and 1 atm). Advantageously, at 20°C and 1 atm, the solid part has a water content less than 15%, preferably less than 10% and more preferably less than 8% by weight based on the total weight of the solid part.

Advantageously, the first adhesive composition and the second adhesive composition do not comprise soy meal or flour.

The first solid part and the second solid part can be identical or different. In a particular embodiment, the chemical composition of the first solid part and the one of the second solid part are identical. In another particular embodiment, the chemical composition of the first solid part and the one of the second solid part are different. Preferably, the first solid part and the second solid part are identical

The *Helianthus* seed can be a whole *Helianthus* seed, a partially dehulled *Helianthus* seed or a fully dehulled *Helianthus* seed.

Advantageously, *Helianthus* refers to one or more plants belonging to the species *Helianthus agrestis, Helianthus ambiguous, Helianthus angustifolius, Helianthus annuus, Helianthus anomalus, Helianthus argophyllus, Helianthus arizonensis, Helianthus atrorubens, Helianthus bolanderi, Helianthus californicus, Helianthus carnosus, Helianthus ciliaris, Helianthus cinereus, Helianthus coloradensis, Helianthus cusickii, Helianthus debilis, Helianthus decapetalus, Helianthus deserticola, Helianthus dissectifolius, Helianthus divaricatus, Helianthus eggertii, Helianthus exilis, Helianthus floridanus, Helianthus giganteus, Helianthus glaucophyllus, Helianthus gracilentus, Helianthus grosseserratus, Helianthus heterophyllus, Helianthus hirsutus, Helianthus laciniatus, Helianthus laevigatus, Helianthus lenticular is, Helianthus longifolius, Helianthus maximiliani, Helianthus membranifolius, Helianthus microcephalus, Helianthus mollis, Helianthus multiflorus, Helianthus navarri, Helianthus neglectus, Helianthus niveus, Helianthus nuttallii, Helianthus occidentalis, Helianthus paradoxus, Helianthus pauciflorus, Helianthus petiolaris, Helianthus porter, Helianthus praecox, Helianthus pumilus, Helianthus radula, Helianthus resinosus, Helianthus salicifolius, Helianthus sarmentosus, Helianthus scaberrimus, Helianthus schweinitzii, Helianthus silphioides, Helianthus simulans, Helianthus smithii, Helianthus speciosus, Helianthus strumosus, Helianthus subcanescens, Helianthus subtuberosus* and/or *Helianthus verticillatus,* preferably, the ground *Helianthus* meal is ground *Helianthus annuus* meal.

The *Brassica* seed can be a whole *Brassica* seed, a partially dehulled *Brassica* seed or a fully dehulled *Brassica* seed.

Advantageously, *Brassica* refers to one or more plants belonging to the species *Brassica napus (e.g.,* rapeseed, canola), *Brassica juncea, Brassica nigra, Brassica rapa* and/or *Brassica carinata.* Preferably, the ground *Brassica* meal is ground *Brassica napus* meal, in particular ground rapeseed or canola meal.

By "ground *Helianthus* meal" or "ground *Brassica* meal", it is intended a powder (or flour) obtained from a seed belonging to the genus *Helianthus* or *Brassica* respectively, which has been submitted to a fat (oil) extraction step, *i.e.,* which has been at least partially defatted. The *Helianthus* meal can be a *Helianthus* seed press-cake, a solvent extracted *Helianthus* seed meal or a *Helianthus* seed press-cake which has further been submitted to a solvent extraction. The *Brassica* meal can be a *Brassica* seed press-cake, a solvent extracted *Brassica* seed meal or a *Brassica* seed press-cake which has further been submitted to a solvent extraction. The solvent used to prepare the solvent extracted *Helianthus* meal or *Brassica* meal may be organic and/or aqueous, such as hexane, alcohol or aqueous alcohol, preferably hexane. More preferably, the ground *Helianthus* meal or ground *Brassica* meal is a ground hexane-extracted *Helianthus* seed meal or *Brassica* meal respectively.

Preferably, "ground *Helianthus* meal" and "ground *Brassica* meal" refer to a micronized *Helianthus* meal and to a micronized *Brassica* meal respectively. They do not refer to a heat-treated meal, a meal treated with an acid and/or a meal obtained from defibrated *Helianthus* or *Brassica* plant or a part thereof. By "heat-treated meal", it is meant that the meal has been submitted to a heat treatment at a temperature of at least 130°C. By "defibrated", it is intended passed through a defibrating apparatus such as a refiner or a defibrator (such as by the Asplund or Mason method).

In a preferred embodiment the first solid part and/or the second solid part comprise ground *Helianthus* or *Brassica* meal or mixture thereof having a granulometry d50 of less than 300 $\mu$m.

In a particular embodiment, the ground *Helianthus* or *Brassica* meal present in the first solid part and/or in the second solid part has a granulometry d50 between 1 $\mu$m and 300 $\mu$m, preferably, between 10 $\mu$m and 275 $\mu$m and, more preferably, between 20 $\mu$m and 250 $\mu$m, most preferably between 20 $\mu$m and 140 $\mu$m.

Advantageously, the ground *Helianthus* or *Brassica* meal present in the first solid part and/or in the second solid part further has a granulometry d90 of less than 800 $\mu$m, preferably less than 400 $\mu$m.

The granulometry d50 and d90 are well known by the skilled person as the maximum size of 50% and 90% respectively of the smallest particles in weight, and can be measured with a granulometer, for example according to the method described in Example 1 "Materials".

Advantageously, the ground *Helianthus* or *Brassica* meal present in the first solid part and/or in the second solid part comprises between 10% and 65% by weight of crude proteins, preferably, between 20% and 55%, more preferably, between 25% and 50%, based on dry matter.

The crude protein content of the ground *Helianthus* or *Brassica* meal can be measured following the Kjeldahl procedure (NF EN ISO 5983-2: 2009) with a nitrogen-to-protein conversion factor of 6.25.

Advantageously, the ground *Helianthus* or *Brassica* meal present in the first solid part and/or in the second solid part comprises between 0% and 15% by weight of oil, preferably, between 0% and 10%, more preferably, between 0% and 5% even more preferably, between 0.1% and 2.5%, based on dry matter.

By "lignocellulosic material", it is meant a lignocellulosic material different from the ground *Helianthus* or *Brassica* meal, in particular straw, paper, cardboard, wood strands, and/or wood particles, preferably, wood strands and/or wood particles, more preferably wood particles. The wood particles can be chips, flakes (or strands), sawdust, powder or any other waste based on wood originating from a sawmill. The lignocellulosic material is not wood fibers, obtainable by processing wood chips in a defibrating apparatus such as a refiner or defibrator.

Preferably, the wood is pine wood, spruce wood, birch wood and/or beech wood, more preferably, the wood is spruce wood.

Advantageously, the lignocellulosic-based article is a wood board (or wood-based panel), preferably oriented strand board (OSB) or particleboard, more preferably particleboard.

In a particular embodiment, the lignocellulosic material to be resinated by the first adhesive composition *i.e.*, the lignocellulosic material used to produce the core layer is identical to the lignocellulosic material to be resinated by the second adhesive composition *i.e.*, the lignocellulosic material used to produce the surface layers.

In a preferred embodiment, the lignocellulosic material to be resinated by the first adhesive composition *i.e.*, the lignocellulosic material used to produce the core layer is different from the lignocellulosic material to be resinated by the second adhesive composition *i.e.*, the lignocellulosic material used to produce the surface layers.

In this embodiment, the lignocellulosic materials can differ by their nature but also, for a same type of lignocellulosic material, by at least one physical characteristic such as, for example, the average particle size. In a particular example of this embodiment, one can cite wood particles used as lignocellulosic material for the surface layers which present a smaller average particle size than wood particles used as lignocellulosic material for the the core layer, the wood species implemented for these two lignocellulosic materials being identical or different, preferably identical.

Advantageously, the lignocellulosic-based article is not obtained from defibrated lignocellulosic material and/or from defibrated *Helianthus* or *Brassica* meal. In addition, the lignocellulosic-based article is also not obtained from wood fibers.

According to the process of the invention, the first adhesive composition and/or the second adhesive composition can further comprises at least one additive. When the first adhesive composition and the second adhesive composition comprise both at least one additive, the latter can be identical or different in both compositions. The additive(s) can be added to the solid part and/or liquid part of the two-part adhesive compositions.

Exemplary additives usable in the invention include clays, in particular, an intercalated clay, partially exfoliated clay, exfoliated clay, for example montmorillonite, cellulose nanoparticles, catalysts, tacking agents, extenders, fillers, viscosifying agents, surfactants, adhesion promoters, antioxidants, antifoaming agents, antimicrobial agents, antibacterial agents, fungicides, pigments, inorganic particules (*e.g.*, titanium dioxide, yellow iron oxide, red iron oxide, black iron oxide, zinc oxide, aluminum oxide, aluminum trihydrate, calcium carbonate, magnesium oxide), gelling agents, aereosolozing agents, cross-linking agents, agents that improve moisture resistance, pH modulators, composite-release promoters, formaldehyde scavenging agents, fire retardants, wetting agents, and wood preservatives.

The at least one additive may be a water-dispersible additive or a water-soluble additive. Water-soluble additives include hydroxyl-functional or amine-functional compounds.

The at least one additive may also be a non-volatile (*e.g.*, having a boiling point of greater than about 180°C, at atmospheric pressure), inert viscosity-reducing diluent.

The at least one additive may be at least one agent that improves moisture-resistance, a composite-release promoter (such as a composite-release promoter selected from the group consisting of a $C_{10-25}$ alkanoic acid, a salt of a $C_{10-25}$ alkanoic acid, a $C_{10-25}$ alkenoic acid, a salt of an $C_{10-25}$ alkenoic acid, and a silicone).

In particular, the at least one additive may be a fire retardant, wood preservative, antimicrobial agent, antibacterial agent or fungicide, any of which may be in the form of nanoparticles.

Advantageously, if the first adhesive composition and/or the second adhesive composition comprise one or more additives, each additive present in the first and/or the second adhesive composition is independently present in an amount ranging from 0.001% (w/w) to about 20% (w/w), from 0.01 % (w/w) to about 20% (w/w) from 0.1% (w/w) to about 15% (w/w), from 0.1% (w/w) to about 10% (w/w), from 0.5% (w/w) to about 20% (w/w), from 0.5% (w/w) to about 15% (w/w), from 0.5% (w/w) to about 10% (w/w), from 0.5% (w/w) to about 5% (w/w), from 1% (w/w) to about 20% (w/w), from 1% (w/w) to about 10% (w/w), from 1% (w/w) to about 5% (w/w), from 1% (w/w) to about 3% (w/w) or from 5% (w/w) to about 10% (w/w). In certain embodiments, such as where the additive is a fire retardant, the additive may be present in the first and/or the second adhesive composition in an amount ranging from about 1% (w/w) to about 40% (w/w), from about 10% (w/w) to about 40% (w/w), from about 20% (w/w) to about 40% (w/w), or from about 25% (w/w) to about 35% (w/w).

It should be noted that some of the below-listed additives are solid under normal temperature and pressure (i.e., 20°C and 1 atm). Therefore they can be added to the solid part of the first and/or the second adhesive composition or added to the liquid part of the first and/or the second adhesive composition as soon as dissolved in said adhesive composition.

In certain embodiments, the additives (in solid and/or liquid form) can be added to the lignocellulosic material at any step of the process of the invention.

Exemplary classes of additives usable in the present invention are described in more detail below.

Intercalated Clay

Intercalated clays can be obtained from commercial sources or prepared by exposing a clay to an intercalating agent. Exemplary types of clay that may be converted to intercalated form include, for example, smectite clays, illite clays, chlorite clays, layered polysilicates, synthetic clays and phyllosilicates. Exemplary specific clays that may be converted to intercalated form include, for example, montmorillonite (e.g., sodium montmorillonite, magnesium montmorillonite and calcium montmorillonite), beidellite, pyrophyllite, talc, vermiculite, sobockite, stevensite, svinfordite, sauconite, saponite, volkonskoite, hectorite, nontronite, kaolinite, dickite, nacrite, halloysite, hisingerite, rectorite, tarosovite, ledikite, amesite, baileychlore, chamosite, clinochlore, kaemmererite, cookeite, corundophilite, daphnite, delessite, gonyerite, nimite, odinite, orthochamosite, penninite, pannantite, rhipidolite, prochlore, sudoite, thuringite, kanemite, makatite, ilerite, octosilicate, magadiite and kenyaite. In certain embodiments, the clay converted to intercalated form is montmorillonite.

Exemplary intercalating agents include, for example, quaternary amine compounds (such as a tetra-alkylammoniun salt), polymers (e.g., a polycaprolactone, maleated polyethylene, or maleated polypropylene) an acrylic monomer, phosphonium compounds, arsonium compounds, stibonium compounds, oxonium compounds, sulfonium compounds, polypropene, fatty acid esters of pentaerythritol, a steroyl citric acid ester and alcohols (such as aliphatic alcohols, aromatic alcohols (e.g., phenols), aryl substituted aliphatic alcohols, alkyl substituted aromatic alcohols, and polyhydric alcohols).

Intercalated clays can be characterized by, for example, the following physical properties: interlayer spacing, d-spacings, clay particle size, particle size distribution, peak degradation temperature, and thickness of layers. Exemplary physical property features for intercalated clays contemplated to be amenable for use in the present invention include, for example, one or more of the following: (i) an intercalated clay having an interlayer spacing of about 0.5 Å to about 100 Å (or about 1 Å to about 20 Å), (ii) a mean particle size of about 1 $\mu$m to about 150 $\mu$m (or about 20 $\mu$m to about 100 $\mu$m), (iii) a particle size distribution where about 90 percent to about 50 percent of the intercalated clay particles have a particle size of from about 20 $\mu$m to about 100 $\mu$m (or about 85 percent to about 65 percent of the intercalated clay particles have a particle size of about 20 $\mu$m to about 100 $\mu$m), (iv) a peak degradation temperature of about 200°C to about 600°C (or from about 300°C to about 500°C), and/or (v) layers in the intercalated clay have a thickness of about 0.5 Å to about 100 Å (or about 5 Å to about 50 Å).

In certain other embodiments, the intercalated clay is intercalated montmorillonite having a particle size of less than about 500 nm, or less than about 100 nm. In certain other embodiments, the intercalated clay is intercalated montmorillonite having a particle size of about 60 nm to about 400 nm.

The clay (e.g., an intercalated clay) may be surface treated with an organic compound, such as a hydrophobic organic compound or hydrophilic organic compound, in order to promote dispersion of the clay in a formulation, such as an adhesive composition described herein. Surface treatment methods and compositions are described in the literature and are contemplated to be amenable for use in the present invention.

The intercalated clay may be added to the solid part or to the liquid part of the adhesive composition. Advantageously, the intercalated clay is added to the solid part of the adhesive composition.

Different intercalated clays may impart different performance properties to the adhesive composition. Accordingly, in certain embodiments, the intercalated clay is an intercalated smectite. In certain other embodiments, intercalated clay is a smectite that has been intercalated with a quaternary ammonium compound. In certain other embodiments, the intercalated clay is an intercalated montmorillonite. In yet other embodiments, the intercalated clay is montmorillonite intercalated with a dimethyl-di(C$_{14\text{-}18}$) alkyl ammonium salt.

Exfoliated Clay & Partially Exfoliated Clay

Exfoliated clay or a partially exfoliated clay can be prepared by exposing an intercalated clay to exfoliation conditions using procedures described in the literature. One procedure for preparing a partially exfoliated clay is to subject an intercalated clay to high shear mixing and/or sonication (e.g., using ultrasound) until the intercalated clay has partially exfoliated. The procedure may be performed by placing the intercalated clay (e.g., quaternary amine intercalated montmorillonite) in a hydrophobic liquid medium (such as mineral oil, soy oil, castor oil, silicone oil, a terpene (e.g., limonene), plant oil alkyl esters (e.g., soy methyl ester and canola methyl ester), mixtures thereof (e.g., a mixture of a silicone oil and limonene),etc.) to form a mixture, and then subjecting the mixture to high shear mixing and/or ultrasound until the intercalated clay has partially exfoliated. Partial exfoliation occurs when clay platelets separate from the intercalated clay particles. The intercalated clay may be added to the adhesive composition, and the adhesive composition is subjected to exfoliation conditions to generate the partially exfoliated clay in situ.

An exfoliated clay can be prepared by exposing an intercalated clay to high shear mixing and/or sonication (e.g., using ultrasound) until substantially all (e.g., greater than 90% w/w, 95% w/w, or 98% w/w) the intercalated clay has exfoliated. The exfoliation procedure can be performed by placing the intercalated clay (e.g., quaternary amine intercalated montmorillonite) in a hydrophobic liquid medium (such as mineral oil, soy oil, castor oil, silicone oil, a terpene (e.g., limonene), plant oil alkyl esters (e.g., soy methyl ester and canola methyl ester), mixtures thereof (e.g., a mixture of a silicone oil and limonene), etc.) to form a mixture, and then subjecting the mixture to high shear mixing and/or sonication (e.g., using ultrasound) until substantially all (e.g., greater than 90% w/w, 95% w/w, or 98% w/w) the intercalated clay has exfoliated. Alternatively, the intercalated clay may be added to the adhesive composition, and the adhesive composition is subjected to exfoliation conditions to generate the exfoliated clay in situ. Alternatively, a clay (such as sodium montmorillonite) may be added to an adhesive composition, together with a quaternary ammonium compound, and optionally together with a satisfactory oil carrier (e.g., one that has the ability to solvate the quaternary compound), and the resulting adhesive composition is subjected to conditions to intercalate the clay and to generated the exfoliated clay or partially exfoliated clay in situ. In addition, if so desired, the quaternary ammonium compound can be pre-dissolved in the oil carrier before it is added to the adhesive composition together with a clay.

In all the above alternatives, the exfoliated clay or the clay together with a quaternary ammonium compound, and optionally together with a satisfactory oil carrier may be added to the solid part or to the liquid part of the adhesive composition. Advantageously, the exfoliated clay or the clay together with a quaternary ammonium compound, and optionally together with a satisfactory oil carrier is/are added to the solid part of the adhesive composition.

Exemplary partially exfoliated clays contemplated to be amenable for use in present invention include partially exfoliated forms of smectite clay, illite clay, chlorite clay, layered polysilicates, synthetic clay and phyllosilicates. Exemplary specific partially exfoliated clays contemplated to be amenable for use in present invention include partially exfoliated forms of, for example, montmorillonite (e.g., sodium montmorillonite, magnesium montmorillonite, and calcium montmorillonite), beidellite, pyrophyllite, talc, vermiculite, sobockite, stevensite, svinfordite, sauconite, saponite, volkonskoite, hectorite, nontronite, kaolinite, dickite, nacrite, halloysite, hisingerite, rectorite, tarosovite, ledikite, amesite, baileychlore, chamosite, clinochlore, kaemmererite, cookeite, corundophilite, daphnite, delessite, gonyerite, nimite, odinite, orthochamosite, penninite, pannantite, rhipidolite, prochlore, sudoite, thuringite, kanemite, makatite, ilerite, octosilicate, magadiite and kenyaite. In certain embodiments, the partially exfoliated clay is partially exfoliated clay montmorillonite.

A partially exfoliated clay can be characterized by, for example, the amount of clay particles that are in the form of platelets. In certain embodiments, about 0.1% w/w to about 40% w/w, about 0.1% w/w to about 20% w/w, about 0.1% w/w to about 10% w/w, about 0.1% w/w to about 5% w/w, about 5% w/w to about 20% w/w of the clay particles are in the form of platelets. In certain embodiments, about 0.1% w/w to about 40% w/w of the clay particles are in the form of platelets having a size of about 1 Å to about 50 Å, about 30 Å to about 50 Å or about 5 Å to about 20 Å.

Exemplary exfoliated clays contemplated to be amenable for use in present invention include exfoliated forms of smectite clay, illite clay, chlorite clay, layered polysilicates, synthetic clay and phyllosilicates. Exemplary specific exfoliated clays contemplated to be amenable for use in present invention include exfoliated forms of, for example, montmorillonite (e.g., sodium montmorillonite, magnesium montmorillonite, and calcium montmorillonite), beidellite, pyrophyllite, talc, vermiculite, sobockite, stevensite, svinfordite, sauconite, saponite, volkonskoite, hectorite, nontronite, kaolinite, dickite, nacrite, halloysite, hisingerite, rectorite, tarosovite, ledikite, amesite, baileychlore, chamosite, clinochlore, kaemmererite, cookeite, corundophilite, daphnite, delessite, gonyerite, nimite, odinite, orthochamosite, penninite, pannantite, rhipidolite, prochlore, sudoite, thuringite, kanemite, makatite, ilerite, octosilicate, magadiite and kenyaite. In certain embodiments, the exfoliated clay is an exfoliated smectite. In certain embodiments, the exfoliated clay is exfoliated montmorillonite.

An exfoliated clay can be characterized by, for example, the size of platelets and the aspect ratio of platelets. In certain embodiments, the size of the platelets is about 1 Å to about 50 Å, about 30 Å to about 50 Å or about 5 Å to about 20 Å. In certain embodiments, the aspect ratio of the platelets is about 100 to about 10000, about 100 to about 5000 or about 200 to about 2000. In certain other embodiments, the exfoliated clay has a mean particle size of less than about 500 nm, less than 100 nm or less than 25 nm. In certain other embodiments, the exfoliated clay has a mean particle size of from about 60 nm to about 400 nm, about 50 nm to about 300 nm, about 40 nm to about 200 nm or about 20 nm to about 150 nm.

In certain other embodiments, a partially exfoliated clay is formed by exposing a clay to an effective amount of a protein component (e.g., ground Helianthus or Brassica meal) to form a mixture and subjecting the mixture to exfoliation conditions, such as high shear mixing and/or sonication. In certain other embodiments, an exfoliated clay is formed by exposing a clay to an effective amount of protein component (e.g., ground Helianthus or Brassica meal) to form a mixture and subjecting the mixture to exfoliation conditions, such as high shear mixing and/or sonication.

Cellulose Nanoparticle

Cellulose nanoparticles can be added to the adhesive composition to achieve certain performance properties, such as to provide an adhesive composition with increased toughness and/or bond strength. Cellulose nanoparticles can be obtained from commercial sources or isolated from plant-based fibers by acid-hydrolysis. Cellulose nanoparticles can be characterized by, for example, the size of the nanoparticle, the cross-sectional shape of the nanoparticle, and the cross-sectional length and aspect ratio of the nanoparticle. Accordingly, in certain embodiments, the cellulose nanoparticle has a size of from about 1 nm to about 2000 nm, about 10 nm to about 1000 nm, about 10 nm to about 500 nm or about 10 nm to about 200 nm. In certain embodiments, the cross-sectional shape of the nanoparticle may be triangular, square, pentagonal, hexagonal, octagonal, circular, or oval. In certain other embodiments, the average cross-sectional length of the cellulose nanoparticle is about 0.1 nm to about 100 nm, or about 1 nm to about 10 nm.

One type of cellulose nanoparticles that may provide certain advantages are cellulose nanofibers. Exemplary cellulose nanofibers are described in, for example, U.S. Patent Application Publication Nos. 2010/0233481, 2010/0240806 and 2010/0282422.

Catalyst

A catalyst may be added to the adhesive composition to facilitate polymerization. Exemplary catalysts include, for example, a primary amine, a secondary amine, a tertiary amine, an organometallic compound, or a combination thereof. Exemplary primary amines include, for example, methylamine, ethylamine, propylamine, cyclohexylamine, and benzylamine. Exemplary secondary amines include, for example, dimethylamine, diethylamine, and diisopropylamine. Exemplary tertiary amines include, for example, diazabicyclooctane (Dabco), triethylamine, dimethyl benzylamine, bis-dimethylaminoethyl ether, tetramethyl guanidine, bis-dimethylaminomethyl phenol, 2,2'-dimorpholinodiethyl ether, 2-(2-dimethylaminoethoxy)-ethanol, 2-dimethylaminoethyl-3-dimethylaminopropyl ether, bis-(2-diaminoethyl)-ether, N,N-dimethyl piperazine, N-(2-hydroxyethoxyethyl)-2-azanorbornane, Tacat DP-914 (Texaco Chemical), Jeffcat® , N,N,N,N-tetramethyl butane-1,3 -diamine, N,N,N,N-tetramethyl propane- 1,3 -diamine, N,N,N,N-tetramethyl hexane-1,6-diamine, 2,2'-dimorpholinodiethyl ether (DMDEE), or a mixture thereof. Exemplary organometallic compounds include, for example, di-n-octyl tin mercaptide, dibutyl tin maleate, diacetate, dilaurate, dichloride, bis-dodecyl mercaptide, tin(II)acetate, ethyl hexoate and diethyl hexoate, $Fe^{3+}$ 2,4-pentanedionate (FeAcAc) or lead phenyl ethyl dithiocarbamate.

In certain other embodiments, the catalyst is a transition metal acetylacetonate, *e.g.*, an acetylacetonate compound comprising iron, copper, or nickel. In certain embodiments, the transition metal acetylacetonate comprises a tertiary amine, *e.g.*, 2,2'-dimorpholino diethyl ether.

The amount of catalyst used in the adhesive composition can be varied in order to optimize the features of the adhesive composition. In certain embodiments, the catalyst is present in less than 1% (wt/wt), 0.5% (wt/wt) or 0.1% (wt/wt) of the adhesive composition. In certain other embodiments, the catalyst is present in a range from 0.001% (wt/wt) to 0.75% (wt/wt), 0.001% (wt/wt) to 0.01% (wt/wt), 0.01% (wt/wt) to 0.05% (wt/wt) or 0.05% (wt/wt) to 0.5% (wt/wt) of the adhesive composition.

Tacking Agent

Exemplary tacking agents include, for example, corn syrup, soy oil, a poly($C_2$-$C_6$) alkylene, mineral oil, an ethylene/propylene/styrene copolymer, a butylene/ethylene/styrene copolymer, or a mixture of one or more of the foregoing. Other exemplary tacking agents are copolymers that have a low glass transition temperature (Tg) (*e.g.*, a latex-based, acrylic copolymer with a Tg of less than about 0°C, and preferably less than about -20 °C). In certain embodiments, the additive is polybutene. In certain embodiments, the polybutene has a weight average molecular weight of from about 200 g/mol to about 20000 g/mol, from about 200 g/mol to about 10000 g/mol, from about 200 g/mol to about 5000 g/mol, from about 200 g/mol to about 2000 g/mol, from about 200 g/mol to about 1000 g/mol, from about 500 g/mol to about 2000 g/mol, or from about 500 g/mol to about 1000 g/mol. Other tacking agents include a solid selected from the group consisting of a terpene resin, a rosin ester derivative, and a hydrocarbon-based derivative. When the tacking agent is a solid, the solid tacking agent can be pre-melted and dispersed in water by means of the ground *Helianthus* or *Brassica* meal, or the solid tacking agent can be ground and dispersed as fine particulates directly into the adhesive composition.

Alternatively, the tacking agent may be added to the solid part or to the liquid part of the adhesive composition. Advantageously, the tacking agent is added to the solid part of the adhesive composition.

Extender

Exemplary extenders include, for example, inert extenders or active extenders. In certain embodiments, the inert extender is vegetable particulate matter, dibasic esters, propylene carbonate, non-reactive modified aromatic petroleum hydrocarbons, soy oil, and castor oil. Another inert extender or is any non-active hydrogen containing solid that is soluble, *e.g.*, soluble in oil or soluble in water. The active extender can be a pyrrolidone monomer or polymers, an oxizolidone monomer or polymers, an epoxidized oil, or an unsaturated oil, such as linseed oil. Another active extender is a vinyl monomer or mixture of vinyl monomers.

Surfactant & Adhesion Promoter

Exemplary surfactants include, for example, monomeric types, polymeric types, or mixtures thereof. Exemplary adhesion promoters include, for example, organosilanes and titanates.

Antimicrobial Agent

Antimicrobial agents known in the art that do not substantially react with the amine-based azetidinium-functional cross-linker are contemplated for use in the adhesive composition and lignocellulosic-based article described herein. One exemplary antimicrobial agent is benzoic acid, propionic acid, sodium benzoate, sorbic acid and potassium sorbate.

Crosslinking Agent

In other embodiments, the additive can be a crosslinking agent, for example, a crosslinking agent that can be used to bond lignocellulosic material to glass. Exemplary crosslinking agents include an organosilane, such as dimethyldichlorosilane (DMDCS), alkyltrichlorosilane, methyltrichlorosilane (MTCS), N-(2-aminoethyl)-3-aminopropyl trimethoxysilane (AAPS), or a combination thereof. In other embodiments the ground *Helianthus* or *Brassica* meal is combined with an organosilane to form an adhesive for bonding one or more substrates together in any combination, said substrates including glass, paper, wood, ceramic, steel, aluminum, copper, brass, etc. The term "organosilane" refers to any group of molecules including monomers, hydrolyzed monomers, hydrolyzed dimers, oligomers, and condensation products of a trialkoxysilane having a general formula: $(RO)_3Si\text{-}R'$ where R is preferably a propyl, ethyl, methyl, isopropyl, butyl, isobutyl, sec-butyl, t-butyl or acetyl group, and R' is an organofunctional group where the functionality may include an aminopropyl group, an aminoethylaminopropyl group, an alkyl group, a vinyl group, a phenyl group, a mercapto group, a styrylamino group, a methacryloxypropyl group, a glycidoxy group, an isocyante group, or others.

Similarly, a bis-trialkoxysilane having the general formula $(RO)_3Si\text{-}R'\text{-}Si(OR)_3$ can also be employed as an "organosilane" either alone or in combination with a trialkoxysilane, where R is preferably a propyl, ethyl, methyl, isopropyl, butyl, isobutyl, sec-butyl, t-butyl or acetyl group, and R is a bridging organofunctional residue which may contain functionality selected from the group consisting of amino groups, alkyl groups, vinyl groups, phenyl groups, mercapto groups, and others. Similarly, a tetraalkoxysilane having the general formula $(RO)_4Si$ can also be employed as an "organosilane" either alone or in combination with a trialkoxysilane or a bis-trialkoxysilane, where R is preferably a propyl, ethyl, methyl, isopropyl, butyl, isobutyl, sec -butyl, t-butyl or acetyl group.

Agent that Improves Moisture-Resistance

Agents that improve moisture-resistance refer to those materials that, when added to adhesive compositions described herein, improve the ability of a wood composite formed from the adhesive to be resistant to water, *i.e.*, not absorb water. Exemplary types of agents that improve moisture resistance include fluorinated polyol compounds, silicones, siloxanes (including functionalized siloxane polymers, such as hydroxy-terminated siloxane polymers or hydroxyl alkyl siloxane polymers), polyolefin polymers, wax (*e.g.*, fatty acids (such as an alkyl carboxylic acid), salts of a fatty acid (*e.g.*, an alkali metal salt of an alkyl carboxylic acid), esters of a fatty acid (*e.g.*, an alkyl ester of a carboxylic acid, an aryl ester of a carboxylic acid, an alkyl ester of an alkanoic acid, or an aryl ester of an alkanoic acid), fatty alcohols, mixtures of hydrophobic hydrocarbons, water-based emulsions containing hydrophobic hydrocarbons dispersed therein, a hydrocarbon wax, a fluoroalkylphosphate wax, a fluorinated hydrocarbon wax, and a fluoroalkyl functionalized wax), and hydrophobic oils. Another agent that improves moisture-resistance is a fluorinated silicone. When an agent that improves moisture-resistance is present in an adhesive composition, it is desirably present in an amount effective to increase moisture resistance (*e.g.*, an increase in moisture resistance of at least about 2%, 5%, 10%, or 20% compared to the moisture resistance of a composite formed from an adhesive composition lacking the agent that improves moisture-resistance).

Agents that improve moisture-resistance may be present in the final composite at a weight percent in the range of about 0.01% (w/w) to about 5% (w/w), about 0.01% (w/w) to about 2% (w/w), about 0.01% (w/w) to about 1% (w/w), about 0.01% (w/w) to about 0.5% , about 0.1% (w/w) to about 2% (w/w), (w/w), about 0.1% (w/w) to about 1% (w/w) or about 0.5% (w/w) to about 1% (w/w).

One exemplary fluorinated polyol compound is FluoroLink D-10 fluorinated polyol that is commercially available from Solvay Solexis, Inc. Exemplary silicones include Dow Corning FS-1265 Fluid, 300 cST (Trifluoropropyl Methicone) from Dow Corning), and T-Sil- 601 1 SE Emulsion (60% Solids), from Siovation, Inc. which is a emulsion containing 60% w/w silicones. The silicone may be organically modified, such as $C_{20-24}$ Alkyl Methicone, $C_{24-28}$ Alkyl Methicone, $C_{30-45}$ Alkyl Methicone, Stearyl Dimethicone, Biphenyl Dimethicone, Stearoxy Dimethicone, $C_{20-24}$ Alkyl Dimethicone, or $C_{24-28}$ Alkyl Dimethicone.

Exemplary types of functionalized siloxane polymers include (1) a hydroxy- terminated siloxane polymer such as hydroxy-terminated polydimethylsiloxane (*e.g.*, T-Sil-80, a linear hydroxy terminated polydimethylsiloxane from Siovation, Inc.), (2) a hydroxyl alkyl polydimethylsiloxane (*e.g.*, Tego Protect-5000 functionalized silicone fluid commercially available from Evonik Tego Chemie GmbH), and (3) a fluorinated siloxane.

Exemplary waxes include Hexion EW-58H; BE Square 165 Amber Petroleum Macrocrystalline Wax commercially available from Baker Hughes, Inc., which is a mixture comprising paraffinic, isoparaffinic, and naphthenic hydrocarbons; Masurf FS 115 Emulsion (a fluoroalkylphosphate wax dispersion in water- 28% Solids) commercially available from Mason Chemical Company; carnauba wax; candelilla wax; 24eson wax; beeswax; rice bran wax; montan wax; paraffin; ceresin; lanolin; ozokerita; slack wax (which is semi-refined wax having an oil content up to about 30 mass percent, and often produced by chilling and solvent filter-pressing wax distillate); polyethylene wax; a fatty acid or salt thereof (*e.g.*, $C_{10-25}$ alkanoic acid, a salt of a $C_{10-25}$ alkanoic acid, a $C_{10-25}$ alkenoic acid, a salt of an $C_{10-25}$ alkenoic acid; such as stearic acid, zinc stearate, or lauric acid), a fatty ester (*e.g.*, an ester of an $C_{10-25}$ alkanoic acid or $C_{10-25}$ alkenoic acid); or fatty alcohol (*e.g.*, $C_{10-25}$ hydroxy alkane or $C_{10-25}$ hydroxy alkene).

Exemplary hydrophobic polymers include a polyolefin (*e.g.*, polyethylene, polypropylene, polybutylene, polystyrene, copolymers of the foregoing, polyethylene/polyvinyl acetate copolymer, and polyethylene/polyacrylic acid copolymer).

Exemplary hydrophobic oils include soy lecithin, castor oil, linseed oil, tung oil, and a fluorinated hydrocarbon liquid.

Another agent that improves moisture resistance is a mixture of a silicone and a terpene compound. An exemplary silicone is Tego Protect-5000 functionalized silicone fluid sold by Evonik Tego Chemie GmbH. Exemplary terpene compounds contemplated for use include terpene compounds that are a solid at room temperature, a liquid at room temperature, and/or have a molecular weight of less than about 2000 g/mol, about 1000 g/mol, about 500 g/mol, or about 200 g/mol. In certain embodiments, the terpene compound is limonene. In certain embodiments, the agent that improves moisture resistance is a mixture of Tego Protect- 5000 functionalized silicone fluid and limonene.

In certain embodiments, the agent that improves moisture-resistance is a polymer agent that improves moisture-resistance, a wax agent that improves moisture-resistance, or a mixture thereof. In certain other embodiments, the agent that improves moisture-resistance is a silicone, a siloxane, a fluorinated polyol, a fluoroalkyl phosphate ester, a fluoroalkyl carboxylic ester, a salt of a fluoroalkanoic acid, a wax that improves moisture-resistance, or a mixture thereof. In certain other embodiments, the agent that improves moisture-resistance is a wax that improves moisture-resistance, such as a mixture of hydrophobic hydrocarbons, water-based emulsions containing hydrophobic hydrocarbons dispersed therein, a fluoroalkylphosphate wax, a fluorinated hydrocarbon wax, or a fluoroalkyl functionalized wax. In certain other embodiments, the agent that improves moisture-resistance is a silicone, a siloxane, a fluorinated polyol, a fluoroalkyl phosphate ester, or a fluoroalkyl carboxylic ester. In certain other embodiments, the agent that improves moisture-resistance is a silicone, a siloxane, a fluorinated polyol, a fluoroalkyl phosphate ester, a fluoroalkyl carboxylic ester, a salt of a fluoroalkanoic acid, or a mixture thereof. In certain other embodiments, the agent that improves moisture- resistance is a silicone, a siloxane, a fluorinated polyol, a fluoroalkyl phosphate ester, a fluoroalkyl carboxylic ester, or a wax that improves moisture-resistance. In certain other embodiments, the agent that improves moisture-resistance is a fluorinated polyol, a silicone, a siloxane, or wax that improves moisture-resistance. In yet other embodiments, the agent that improves moisture-resistance is a mixture comprising hydrophobic hydrocarbons.

The term "fluoroalkyl phosphate ester" as used herein refers to a compound comprising a phosphate group bonded to at least one fluoroalkyl group, such as represented by $P(O)(OR^1)(OR^2)_2$, wherein $R^1$ is a fluoroalkyl group, and $R^2$ represents independently for each occurrence hydrogen, alkyl, fluoroalkyl, aryl, aralkyl, heteroalkyl, heteroaryl, heteroaralkyl, an alkali metal, ammonium, or a quaternary amine, or two occurrences of $R^2$ are taken together to form an alkaline earth metal.

pH Modulator

The pH modulator can be an acid or base. In certain embodiments, the pH modulator is an alkali hydroxide (*e.g.*, sodium hydroxide or calcium hydroxide), an alkali metal salt of a carboxylate organic compound (*e.g.*, an alkali metal salt of citrate, such as di-sodium citrate).

The pH modulator can be a metal oxide, advantageously chosen from the group consisting of MgO, CaO, $K_2O$, $Na_2O$, SrO, or a mixture thereof, and more advantageously MgO.

Preferably, pH modulator implemented in the present invention is an alkali hydroxide such as sodium hydroxide or a metal oxide, such as MgO. In this preferred embodiment, the alkali hydroxide can be added to the liquid part of the adhesive composition and the metal oxide can be added to the solid part of the adhesive composition of the invention.

## Composite-Release Promoter

The two-part adhesive composition of the present invention advantageously does not stick to metal press plates. However, the composite-release promoter acts to facilitate release of certain wood composites from certain press apparatus used to make the composite. In the absence of a composite-release promoter, certain composites may stick to the press apparatus, making it difficult to separate the composite from the press apparatus. The composite-release promoter solves this problem by facilitating release of the wood composite. Exemplary composite-release promoters include silicones (*e.g.*, silicones described above), fatty acids, a salt of a fatty acid, waxes. Exemplary fatty acids or salts thereof include a $C_{10-25}$ alkanoic acid, a salt of a $C_{10-25}$ alkanoic acid, a $C_{10-25}$ alkenoic acid, a salt of an $C_{10-25}$ alkenoic acid; *e.g.*, stearic acid, zinc stearate, lauric acid, oleic acid or a salt thereof (such as an alkali metal salt of oleic acid, such as potassium oleate). It is understood that a mixture of two or more of the aforementioned exemplary composite-release promoters can also be used in the adhesive compositions herein. Exemplary waxes include those described above for the agent that improves moisture resistance, and in particular, Hexion EW-58H; E Square 165 Amber Petroleum Macrocrystalline Wax commercially available from Baker Hughes, Inc.; and Masurf FS 115 Emulsion (28% Solids) commercially available from Mason Chemical Company.

In certain embodiments, the composite-release promoter is a silicone.

Further, in certain embodiments, a composite-release promoter is present in the final composite at a weight percent in the range of about 0.01% (w/w) to about 5% (w/w), about 0.01% (w/w) to about 2% (w/w) or about 0.01% (w/w) to about 1% (w/w).

## Fire Retardant

Exemplary fire retardants include, for example, (i) phosphoric acid or a salt thereof, such as a mono-ammonium phosphate, di-ammonium phosphate, ammonium poly - phosphate, melamine phosphate, guanidine phosphate, urea phosphate, alkali metal phosphate, and alkaline earth metal phosphate, (ii) a halogenated phosphate compound, (iii) a phosphate ester, such as tri-o-cresyl phosphate and tris(2,3-dibromopropyl) phosphate, (iv) a chlorinated organic compound, such as a chlorinated hydrocarbon or chlorinated paraffin, (iv) a brominated organic compound, such as a brominated hydrocarbon, bromo-bisphenol A, tetrabromobisphenol A (TBBPA), decabromobiphenyl ether, octabromobiphenyl ether, tetrabromobiphenyl ether, hexabromocyclododecane, bis(tetrabromophthalimido) ethane, tribromophenol, andbis(tribromophenoxy) ethane, (v) a brominated oligomer or brominated polymer, such as TBBPA polycarbonate oligomer, brominated polystyrene, and TBBPA epoxy oligomer, (vi) a borate compound, such as an alkali metal borate, ammonium borate, or mixture comprising one or more of borax, boric acid, boric oxide, and disodium octoborate, (vii) aluminium materials, such as aluminium trihydrate and aluminium hydroxide, (viii) an alkaline earth metal hydroxide, such as magnesium hydroxide, (ix) an alkali metal bicarbonate, such as sodium bicarbonate, (x) an alkaline earth metal carbonate, such as calcium carbonate, (xi) antimony trioxide, (xii) hydrated silica, (xiii) hydrated alumina, (xiv) dicyandiamide, (xv) ammonium sulfate, and (xvi) a mixture of guanylurea phosphate and boric acid, such as those described in International Patent Application Publication No. WO 02/070215, (xvii) graphite, (xviii) melamine, and (xix) a phosphonate compound, such as diethyl-N,N-bis(2-hydroxyethyl) aminoethyl phosphonate ; dimethyl-N,N-bis(2-hydroxyethyl) aminomethyl phosphonate ; dipropyl-N,N-bis(3-hydroxypropyl) aminoethyl phosphonate; and dimethyl-N,N-bis(4-hydroxybutyl) aminomethyl phosphonate, such as described in U.S. Patent No. 6,713, 168.

In certain embodiments, the fire retardant is (i) phosphoric acid or a salt thereof, such as a mono-ammonium phosphate, di-ammonium phosphate, ammonium poly -phosphate, melamine phosphate, guanidine phosphate, urea phosphate, alkali metal phosphate, and alkaline earth metal phosphate, (ii) a phosphate ester, such as tri-o-cresyl phosphate and tris(2,3- dibromopropyl) phosphate, aluminium trihydrate and aluminium hydroxide, (iii) an alkaline earth metal hydroxide, such as magnesium hydroxide, (iv) an alkali metal bicarbonate, such as sodium bicarbonate, (v) antimony trioxide, or (vi) hydrated alumina.

In certain other embodiments, the fire retardant is Colemanite ($CaB_3O_4(OH)_3 - H_2O$).

## Wood Preservative

Exemplary wood preservatives include, for example, (i) chromated copper arsenate (CCA), (ii) alkaline copper quaternary, (iii) copper azole, (iv) a borate preservative compound, (v) a sodium silicate-based preservative compound, (vi) a potassium silicate-based preservative compound, (vii) a bifenthrin preservative compound, (viii) a coal-tar creosote, (ix) linseed oil, (x) tung oil, and (xi) an insecticide, such as an organochloride compound, organophosphate compound, carbamate compound, pyrethroid, neonicotinoid, and ryanoid.

Carbohydrate

Carbohydrates include monosaccharides, oligosaccharides (such as disaccharides), polysaccharides, starch or dextrin.

Starch can be for example potato starch, wheat starch, tapioca starch, cassava starch, rice starch, corn starch, waxy corn starch. It can also be starch ester, hydroxyethylated or hydroxypropylated starch, carboxymethyl starch, cationic or anionic starch.

In particular, carbohydrates include monosaccharides such as glucose, fructose, galactose; disaccharides such as sucrose, lactose, lactulose, cellobiose, xylobiose, tetrahalose, maltose; amino sugars such as galactosamine, glucosamine and chitobiose; sugar acids such as aldonic acids, uronic acids and aldaric acids; oligosaccharides such as gluco-oligosaccharide, fructo-oligosaccharides; polysaccharides such as chitin, chitosan; carbohydrate syrups such as glucose syrup, corn syrup, high fructose corn syrup, high maltose corn syrup, sweet sorghum syrup, maple syrup, birch syrup, fruit syrups, invert syrups; by products of sugar refineries such as molasses, treacle and golden syrup; and/or products of hydrolysis or condensation of polysaccharides.

Preferably, the additive is a pH modulator and/or a metal oxide as described above, in particular, an alkali hydroxide, such as sodium hydroxide and/or a metal oxide, such as MgO. Preferably, when the adhesive composition comprises an alkali hydroxide, these additives are present into the liquid part of the adhesive composition implemented in the present invention. When the adhesive composition comprises a metal oxide, this additive is present into the solid part of the adhesive composition implemented in the present invention.

Advantageously, in the process for preparing a multi-layer lignocellulosic-based article according to the invention, the weight ratio of the amine-based azetidinium-functional cross-linker / lignocellulosic material (dry weight / dry weight) is comprised between 0.2% and 10%, preferably, between 0.5% and 5%, more preferably, between 0.6% and 1.5%. The weight of the amine-based azetidinium-functional cross-linker is to be understood as the sum of the weight of the amine-based azetidinium-functional cross-linker present in the first liquid part with the weight of the amine-based azetidinium-functional cross-linker present in the second liquid part.

Advantageously, in the process for preparing a multi-layer lignocellulosic-based article according to the invention, the weight ratio of diluent (if present) / lignocellulosic material (dry weight / dry weight) is comprised between 0.5% and 12%, preferably, between 1% and 6%, more preferably, between 1% and 4%.

Advantageously, in the process for preparing a multi-layer lignocellulosic-based article according to the invention, the weight ratio of the ground *Helianthus* or *Brassica* meal / lignocellulosic material (dry weight / dry weight) is comprised between 0.5% and 20%, preferably, between 1.0% and 10%, more preferably, between 3% and 6%. The weight of the ground *Helianthus* or *Brassica* meal is to be understood as the sum of the weight of the ground *Helianthus* or *Brassica* meal present in the first solid part with the weight of the ground *Helianthus* or *Brassica* meal present in the second solid part.

Advantageously, in the process for preparing a multi-layer lignocellulosic-based article according to the invention, the weight ratio of amine- or amide-based compound (preferably urea) / lignocellulosic material (dry weight / dry weight) is comprised between 0.5% and 6%, preferably, between 0.8% and 4%, more preferably, between 1% and 4%.

In all the above-disclosed ratios, the weight of the lignocellulosic material is to be understood as the sum of the weight of the lignocellulosic material to be resinated by the first adhesive composition with the weight of the lignocellulosic material to be resinated by the second adhesive composition.

In a specific embodiment of the invention, the first two-part adhesive composition for resinating the lignocellulosic material forming the core layer consists in:

- a first solid part consisting of ground *Helianthus* and/or *Brassica* meal, preferably ground *Helianthus* meal, preferably having a granulometry d50 of less than 300 $\mu$m, and optionally at least one additive, and
- a first liquid part consisting of an amine-based azetidinium-functional cross-linker, water, an amine- or amide-based compound (preferably urea), and optionally a diluent (preferably a polyol) and/or at least one additive, identical to or different from the at least one additive in the solid part, if present.

The ground *Helianthus* or *Brassica* meal, preferably ground *Helianthus* meal, the amine-based azetidinium-functional cross-linker, amide-based compound (preferably urea), and the optional diluent (preferably a polyol) and additive(s) are as described above.

In a particular embodiment, the optional additive is preferably an alkali hydroxide such as sodium hydroxide, and is advantageously present in the first liquid part and/or the second liquid part. In another particular embodiment, the optional additive is preferably a metal oxide such as MgO and is advantageously present in the first solid part and/or the second solid part.

Advantageously, the first (or the second) liquid part of the first (or the second) adhesive composition is added to the lignocellulosic material or to the mixture of the lignocellulosic material and the first (or the second) solid part of the first (or the second) adhesive composition by injection or spraying, preferably by spraying.

Advantageously, the first (or the second) solid part of the first (or the second) adhesive composition is added to the lignocellulosic material or to the mixture of the lignocellulosic material and the first (or the second) liquid part of the first (or the second) adhesive composition through a hopper.

In a preferred embodiment of the process of the invention, step ii) - in particular step ii.a) and/or step ii.b, preferably, steps ii.a) and ii.b) - are carried out under mixing. Mixing is advantageously continued at least 2 min after step ii), even more preferably, at least 5 min after step ii).

In a preferred embodiment of the process of the invention, step iii) - in particular step iii.a) and/or step iii.b, preferably, steps iii.a) and iii.b) - are carried out under mixing. Mixing is advantageously continued at least 2 min after step iii), even more preferably, at least 5 min after step iii).

The mixing step or the mixture defined in the process of the invention can be carried out using a blender.

Advantageously, the process according to the invention does not comprise a drying step of the liquid parts of the adhesive composition before step ii.b) or before step iii.b). Preferably, the process according to the invention does not comprise a drying step of the first (or the second) liquid part and the first (or the second) solid part of the first (or the second) adhesive composition before obtaining the lignocellulosic material impregnated with the first (or the second) adhesive composition.

By "drying step", it is intended a heating step at a temperature of at least 40°C, preferably, at least 50°C, more preferably, at least 60°C.

Preferably, the curing step v) is carried out by heating the lignocellulosic material impregnated with the first and the second adhesive compositions at a curing temperature comprised between 120°C and 250°C, more preferably, between 150°C and 230°C, even more preferably, between 180°C and 210°C.

Preferably, upon curing, the first and the second adhesive compositions forms a solid binder.

Advantageously, the process for preparing a lignocellulosic-based article according to the invention further comprises a pressing step of the lignocellulosic material impregnated with the first and the second adhesive compositions before and/or simultaneously to the curing step v).

Preferably, the pressing factor is comprised between 2 s/mm and 50 s/mm, more preferably, between 4 s/mm and 30 s/mm, even more preferably, between 6 s/mm and 15 s/mm. It is understood that the unit "s/mm" refers to the pressing time in seconds with respect to the thickness of the lignocellulosic material impregnated with the first and the second adhesive compositions. For example, a pressing factor of 10 s/mm and a thickness of 12 mm mean that the pressing time is carried out during 120 s.

Preferably, the process according to the invention further comprises in step iv) both the pressing and curing steps described before.

More preferably, the curing and pressing steps are performed simultaneously.

In an embodiment of the invention, the multi-layer lignocellulosic-based article is provided after placing the lignocellulosic material impregnated with the first and the second adhesive compositions into a mold or in the form of a mat, followed by pressing and heating the lignocellulosic material impregnated with these adhesive compositions at the curing temperature described before.

The invention also relates to a lignocellulosic mat, preferably a three-layer lignocellulosic mat, obtainable by the process of the invention, comprising:

- a core layer comprising a lignocellulosic material, ground *Helianthus* meal and/or ground *Brassica* meal, an amine-based azetidinium-functional cross-linker, water, an amine- or amide-based compound (preferably urea) and optionally a diluent (preferably a polyol) and/or an additive, as described above,
- two surface layer comprising a lignocellulosic material, ground *Helianthus* meal and/or ground *Brassica* meal, an amine-based azetidinium-functional cross-linker, water, and optionally a diluent (preferably a polyol) and/or an additive, preferably not comprising an amine- or amide-based compound, as described above.

The invention also relates to a multi-layer lignocellulosic-based article, preferably a three-layer lignocellulosic-based article, as described above, preferably oriented strand board or particleboard, obtained by the process according to the invention as described above.

Contrary to the term "comprising", it is understood that the terms "consisting of" exclude the presence of any other additional compound.

By "about" a value, it is meant said value plus or minus 10%.

In the context of the present application, and unless otherwise stipulated, the ranges of values indicated are understood to be inclusive.

The invention will be better understood in the light of the following examples, given by way of illustration, with reference to:

- Figure 1 is diagrams illustrating the mechanical properties of particleboards obtained from different methods (Tests 1, 2 and 3) and pressed at different press factors;
- Figure 2 is a diagram illustrating the tack of particleboards obtained from different methods (Tests 1, 2 and 3);
- Figure 3 is diagrams illustrating the mechanical properties of particleboards obtained from different methods (Tests 4a and 4b) and pressed at different press factors;
- Figure 4 is a diagram illustrating the tack of particleboards obtained from different methods (Tests 4a and 4b).

**Example 1: Materials and methods of all the examples (unless otherwise specified) Materials**

The plant based raw materials used in this study are solvent (hexane)-extracted sunflower (Helianthus annuus) meal, provided by Saipol (France) in pellet shape (protein content: 34.45% wt on dry matter; oil content: 0.9% wt on dry matter).

Protein content of sunflower meal was obtained using Kjeldahl procedure (NF EN ISO 5983-2 : 2009) with a nitrogen-to-protein conversion factor of 6.25.

The oil was extracted with a Soxhlet extractor using n-hexane as solvent. Thereafter the hexane was separated from oil by using a rotary evaporator at 68°C.

Sunflower meal was first ground at the desired particle size d10 = 5 $\mu$m; d50 = 30 $\mu$m; d90 = 110 $\mu$m with an impact mill grinder including a classifier from Hosokawa, model 200ZPS. The final dry content of the micronized sunflower meal was 93%. The ground materials were then kept in closed containers.

The particle size of ground samples is measured using a Malvern laser granulometer Mastersizer 3000. Sample material is injected through the dry injection tool of the analyzer. Refractive index and model used are respectively 1.52 and Mie to determine the particle size density profile.

Two polyamidoamine-epichlorohydrin (PAE) resins were used : Soyad™ CA1920 from Solenis (Wilmington, Delaware) or Marenyl WPD 20 from Mare SpA (Milan, Italia). These PAE resins are aqueous solutions with a polymer solids content of 20% wt/wt. Crude vegetable glycerin with a glycerol content of about 85% wt/wt was provided by Saipol (France) and used as a reactive diluent agent. Distilled vegetable glycerin with a glycerol content of at least 99.5% wt/wt was provided by Oleon (France) and also used as a reactive diluent agent.

Urea is a technical grade with urea content of at least 97% wt/wt supplied by YARA France.

The wood particles used for board manufacturing are industrial wood particles containing around 50% recycled wood. These particles were dried beforehand in an oven in order to obtain a moisture content of about 4 parts ATRO. They were then stored in airtight containers to avoid re-humidity.

**Dry content determination**

The material is placed in an aluminum cup with an amount of about 1.5 g. The exact weight is measured with an analytical balance with 4 digits after the decimal point. Then the cup is placed in a fan ventilated oven at 105°C for 3 h. Fan & valve aperture are set at 100% to accelerate water evaporation. Dry content is obtained by measuring the weight of the cup after being removed from the oven immediately or after conditioning in a desiccator to get sample at room temperature. Calculation of dry content is obtained by the calculation of material loss thanks to (1) and (2):

$$m_{loss} = m_0 - m_1 \qquad (1)$$

wherein $m_0$ and $m_1$ are respectively the weight of the cup before being placed in the oven and after being placed in the oven.

$$DC\% = 1 - \frac{m_{loss}}{m_{sample}} \qquad (2)$$

wherein DC%, $m_{loss}$ and $m_{sample}$ are respectively the dry content, the weight of material loss and the weight of sample tested ($m_0$ - $m_{cup}$).

An alternative method consists in using a moisture analyzer (Imal UM2000-LTE) to get the dry content or the moisture content. It enables to have the "atro" mode (i.e., moisture content in weight parts over dry composition) required for wood-based panel manufacturing. This method is also faster (i.e., few minutes versus 3 h) but allows testing only one sample per round. The moisture analyzer is preferably used for wood moisture content determination prior to wood panel making.

**Viscosity measurement**

The viscosity of the adhesive compositions (liquid part) was measured by using a rheometer (Haake MARS 40 by Thermo Scientific) equipped with a Peltier heating/cooling system. The measurement device was a plate/plate system (20 mm diameter, 1 mm gap). Measurement was done with a dynamic mode (shear rate of 10 s$^{-1}$, 50% shear and 20°C temperature). The viscosity value was automatically determined after 5 min of measurement using Rheowin Job manager version 4.81.0000 (Haake Mess Tech, Germany).

**Panel characterization**

Particleboards (600 mm x 600 mm) were cut to get samples for water resistance, Internal Bond (IB) and flexural test. Flexural, Water resistance and IB were done respectively following standard ISO EN 310:1993, ISO EN 317:1993 and ISO EN 319:1993 to get Modulus of Rupture (MOR), Modulus of Elasticity (MOE), Thickness Swelling (TS) after 24 h in water bath, and Internal Bond (IB). Apparatus used for all these measurements was the Imal (Italia), IBX700 model. The test results are mean values with their standard deviation.

To evaluate the MOE and MOR, four test specimens with nominal dimensions of 300 mm x 50 mm x board thickness were cut from wood particleboards. The MOE and MOR of these samples were determined by a static, three point bending test and the values were calculated and recorded for each specimen.

To determine the internal bond strength and the thickness swell, eight test specimens with nominal dimensions of 50.0 mm x 50.0 mm x board thickness were cut from test panels for each condition. The IB was calculated and recorded after each specimen was tested to failure. The TS that is defined as the percentage increase in the thickness of a specimen after immersing in water for 24 h at room temperature were measured, before and immediately after the 24 h soaking process.

**Tack**

Tack, also known as green strength, is the ability of the unset and uncured but formed or shaped composite to hold its shape and remain cohesive from the time the composite is formed or shaped to the time it is set-up or cured or hardened. This is an important property in the manufacture of wood-based panels and in the current process.

Tack was measured and thus defined, by forming a composite structure and testing its integrity. A 200 mm x 200 mm x 200 mm wood forming box was placed on a metal platen below it and between the platen and the box was a thin pliable plastic sheet. The wood forming box was filled with 350 g of impregnated wood from the Examples below. Then, the wood forming box was delicately removed and impregnated wood, or mat, was cold pressed for 30 seconds at a pressure of 0.5 metric tons (MeT) using a CARVER hot press (platen of 250 mm x 250 mm) with a press platen at ambient temperature (no heating).

The mat was then removed without disturbing the shaped structure. After pressing, the platen, the plastic and the mat were moved to a table. The edge of the platen was aligned with the edge of the table. The formed impregnated wood, which was riding on the plastic, was then slowly pushed on above the void. The push on the mat was done at a steady rate of about 1 cm/sec. As each mat was pushed on above the void, it reached a point at which it cannot support its own weight. The mat extending off the end of the table will break off and fall. The distance a sample extends off the end of the table before breaking off was taken as a measure of tack. Measurements were taken for each side of the mat (left and right). The longer a sample extends above the void, the higher the tack, that is, the more integrity it has. Two samples were measured for each test (two values per sample, on the right and left of the mat) and the retained value is an average of the 4 measurements. Samples are compared to get a relative effect.

**Example 2: Manufacturing process including drying step (comparative example)**

Components of the adhesive compositions were first mixed in a 5 L bucket. Depending on the test, all three components (micronized sunflower meal, crude vegetable glycerin (comprising glycerol) and PAE with a pH adjustment at 8) were mixed together (Test 1; Table 1), or a dispersion of sunflower meal was prepared separately from the blend of "PAE + crude vegetable glycerin at pH 8" (Test 2; Table 1). Adhesive compositions were mixed using a deflocculating blade for five to ten minutes. For each test, the pH of the part containing PAE cross-linker was adjusted at 8 thanks to addition of a NaOH solution (10 mol/L).

The whole liquid adhesive solution (Test 1) or only a dispersion of sunflower meal (Test 2) was first added by injection to wood particles into a particle blender (Imal, Lab Glue Blender 300) using a spray nozzle. The mixing step was carried out for 5 min for each blend.

After mixing, the dry content of the blends was controlled by using a moisture analyzer (Imal UM2000-LTE). The wood mixtures containing high humidity level were then dried using an oven (France ETUVES, XXL 4.5) at 60°C.

The moisture content after drying step depended on the test. For Test 1 (Table 1), the blend was dried until obtaining a humidity of 12.5 parts in "ATRO" mode (i.e., moisture content in weight parts over 100 weight parts of dry blend). However, if only the dispersion of sunflower meal was added (Test 2), the blend was dried until a humidity of 4 parts in "ATRO" mode. After the drying step, the blends (wood particles with liquid adhesive solution or dispersion of sunflower meal) were got out of the oven and stored in a closed container.

The dried blend according to the Test 2 (Table 1) underwent an additional step. A liquid part composed of "crude vegetable glycerin + PAE at pH 8" was injected into the wood/sunflower meal blend by using a spray nozzle into the blender. Water was added separately to target a final humidity of the blend at 12.5 parts ATRO. The mixing was carried out for 5 min. The moisture (humidity) of the blend was then measured by using a moisture analyzer.

Finally, 3010 g of impregnated particles was weighted to achieve a density of boards of about 650 kg/m$^3$. Forming box size was 600 mm x 600 mm x 200 mm to make the mat. The mat was cold pressed by hand. The mat was then placed into a heating press from Imal (Italia) (platen of 1000 mm x 1000 mm), pressed to a thickness of 12 mm and cured at 210°C. 4 panels were made for each test with different press times: 8, 10, 12 and 15 s/mm (i.e., 96, 120, 144 and 180 s). After pressing, thickness and weight of the particleboards were measured and recorded. Then the boards were placed in a conditioning room at 20°C and 65% r.h. (relative humidity) for at least three days.

Table 1: Adhesive injection steps implementing a drying step

|  |  |  | Test 1 | Test 2 |
|---|---|---|---|---|
|  |  | Wood particles (g) | 12000 | 12000 |
| Preparation 1 |  | Ground sunflower meal (g) | 497 | 496 |
|  |  | Crude vegetable glycerin (g) | 815 |  |
|  |  | Soyad™ CA1920 (g) | 462 |  |
|  |  | Water (g) | 1254 | 2219 |
|  |  | Moisture content of the blend before drying process (Parts ATRO) | 17.5 | 22.6 |
|  |  | Targeted moisture content of the blend after drying step | 12.5 | 4 |
| Preparation 2 |  | Ground sunflower meal (g) | No preparation |  |
|  |  | Crude vegetable glycerin (g) |  | 392 |
|  |  | Soyad™ CA 1920 (g) |  | 445 |
|  |  | Water (g) |  | 638 |
|  |  | Moisture content of the blend before pressing (Parts ATRO) | 12.5 | 12.5 |

**Example 3: Manufacturing process with a two-part adhesive composition having solid and liquid parts**

The liquid part, consisting of a mixture of PAE Soyad™ CA1920 and crude vegetable glycerin was obtained after mixing into a 5 L bucket for five minutes. The pH of the liquid was then adjusted to reach the value of 8 using a NaOH solution (10 mol/L). The adequate quantity of ground sunflower meal (named the solid part) was then added as described below.

The wood particles were placed in a particle blender (Imal, Lab Glue Blender 300) and the required quantity of water to reach the targeted moisture content of the batch is sprayed using a spray nozzle into the blender on wood particles. Then, the liquid part of the adhesive composition was added to wood particles by injection during 9 min using a spray nozzle into the blender during particle mixing. Finally, the solid ground sunflower meal part was added mechanically (by hand) in the particle blender through an aperture. The mixing step was carried on for 5 min. The moisture content of the blend was then measured by using a moisture analyzer (Imal UM2000-LTE).

Finally, 3010 g of impregnated particles were weighted to reach a density of approximately 650 kg/m$^3$. Forming box size was 600 mm x 600 mm x 200 mm to make the mat. The mat was cold pressed by hand. The mat was then placed into a heating press (Imal, Italia, platen of 1000 mm x 1000 mm), pressed to a thickness of 12 mm and cured at 210°C. 4 panels were made for this Test 3 with different press times: 8, 10, 12 and 15 s/mm (i.e., 96, 120, 144 and 180 s). After pressing, thickness and weight of the particleboards were controlled. Then the boards were placed in a conditioning room at 20°C and 65% r.h. for three days.

Table 2: Adhesive injection steps without a drying step and using a biphasic adhesive

| | Wood particles (g) | Water added separately (g) | Preparation 1 Liquid part | | Preparation 2 Solid part | Moisture content of the blend before pressing (Parts ATRO) |
| | | | Crude vegetable glycerin (g) | Soyad™ CA1920 (g) | Ground sunflower meal (g) | |
|---|---|---|---|---|---|---|
| Test 3 | 11000 | 576 | 373 | 423 | 455 | 12.5 |

**Example 4: Influence of the order of addition of liquid and solid parts in the manufacturing process with two-part adhesive composition having solid and liquid parts**

For all conditions, the liquid part, consisting of a mixture of PAE Soyad™ CA1920 and crude vegetable glycerin was obtained after mixing into a 5 L bucket for 5 min. The pH of the liquid was then adjusted to reach the value of 8 using a NaOH solution (10 mol/L). The adequate quantity of ground sunflower meal (named the solid part) was then added as described below (Tables 3 and 4, Tests 4a and 4b).

In **Test 4a**, the wood particles were placed in a particle blender (Imal, Lab Glue Blender 300) and the required quantity of water to reach the targeted moisture content of the batch is sprayed using a spray nozzle into the blender on wood particles. Then, the liquid part of the adhesive preparation was added to wood particles by injection during 9 min using a spray nozzle into the blender during particle mixing. Finally, the solid ground sunflower meal part was added mechanically (by hand) in the particle blender through an aperture. The mixing step was carried on for 5 min. The moisture content of the blend was then measured by using a moisture analyzer (Imal UM2000-LTE).

In **Test 4b**, the wood particles were placed in a particle blender (Imal, Lab Glue Blender 300) and the required quantity of water to reach the targeted moisture content of the batch is sprayed using a spray nozzle into the blender on wood particles. Contrary to Test 4a, the solid ground sunflower meal part was then added mechanically (by hand) in the particle blender through an aperture to the wood particles. Finally, the liquid part of the adhesive composition was added to wood particles by injection during 9 min using a spray nozzle into the blender during particle mixing. The mixing step was carried on for 5 min. The moisture content of the blend was then measured by using a moisture analyzer (Imal UM2000-LTE).

Finally, 3010 g of impregnated particles prepared according to Test 4a or 4b were weighted to achieve a density of approximately 650 kg/m$^3$ respectively. Forming box size was 600 mm x 600 mm x 200 mm to make the mat. The mat was cold pressed by hand. The mat was then placed into a heating press (Imal, Italia, platen of 1000 mm x 1000 mm), pressed to a thickness of 12 mm and cured at 210°C. 4 panels were made for each test with different press times: 6, 8, 10 and 12 s/mm (i.e., 72, 96, 120 and 144 s). After pressing, thickness and weight of the particleboards were controlled. Then the boards were placed in a conditioning room at 20°C and 65% r.h. for three days.

Table 3: Adhesive injection steps: liquid part then solid part

| | Wood particles (g) | Water added separately (g) | Adhesive Preparation 1 Liquid part | | Adhesive Preparation 2 Solid part | Moisture content of the blend before pressing (parts ATRO) |
| | | | Crude vegetable glycerin (g) | Soyad™ CA1920 (g) | Ground sunflower meal (g) | |
|---|---|---|---|---|---|---|
| Test 4a | 11000 | 576 | 373 | 423 | 451 | 12.5 |

Table 4: Adhesive injection steps: solid part then liquid part

| | Wood particles (g) | Water added separately (g) | Adhesive preparation 1 Solid part | Adhesive preparation 2 Liquid part | | Moisture content of the blend before pressing (parts ATRO) |
|---|---|---|---|---|---|---|
| | | | Ground sunflower meal (g) | Crude vegetable glycerin (g) | Soyad™ CA1920 (g) | |
| **Test 4b** | 11000 | 576 | 451 | 373 | 423 | 12.5 |

**Example 5: Properties of the adhesive compositions and particleboards**

In order to produce a wood based panel adhesive composition with the three raw materials (sunflower meal, crude vegetable glycerin and PAE cross-linker Soyad™ CA1920), a first solution (comparative example) was to mix them all. But by doing that, a thick, very viscous mixture was obtained (200 000 mPa.s). This mixture was too viscous to be sprayed with the nozzles currently used for the injection of a binder for a wood-based panel. So, this mixture needs to have lower viscosity (e.g. below 1000 mPa.s) to be sprayable. Water was added to this mixture to improve the mixture flow (Example 2, Test 1, Table 1). The viscosity reached 375 mPa.s. In this case, when this adhesive preparation was added to the wood particles, the water part of impregnated wood particles was too high causing an overpressure phenomenon during the hot-pressing step of the panel. Indeed, the water part obtained was 17.5 parts ATRO and the highest target was 12.5 parts ATRO. To limit the excess of water, impregnated wood particles with adhesive composition from Example 2 (Test 1, Table 1) were dried in an oven to reach a targeted water part of 12.5 parts ATRO.

The second process of adhesive application (comparative example) consisted in an injection of a ground sunflower meal dispersion into wood particles, a drying step and an addition of reactive liquid material (Example 2, Test 2, Table 1). The viscosity of the sunflower meal dispersion was 215 mPa.s, so had a viscosity that enabled to be sprayed through industrial nozzles. However, the wood/sunflower meal blend had moisture (humidity) of 22.6 parts ATRO. After drying step and injection of water and the liquid part, the desired moisture of 12.5 parts ATRO was reached.

The third method (Example 3, table 2; process using a two-part adhesive composition as implemented in the invention) consisted in addition of extra water in wood particles in order to reach the targeted moisture content of the blend, then a mixture of crude vegetable glycerin and Soyad™ CA1920 is sprayed into wood particles. Finally, the solid ground sunflower meal part is added mechanically (by hand) in the particle blender through an aperture. The mixture of crude vegetable glycerin and Soyad™ CA1920 (under the form of an aqueous solution with a polymer solid content of 20% wt/wt) has a viscosity of 140 mPa.s. This way enabled to add this raw material without extra water from ground sunflower meal dispersion, such as for Tests 1 and 2. No drying step was required because no water was added during this powder addition.

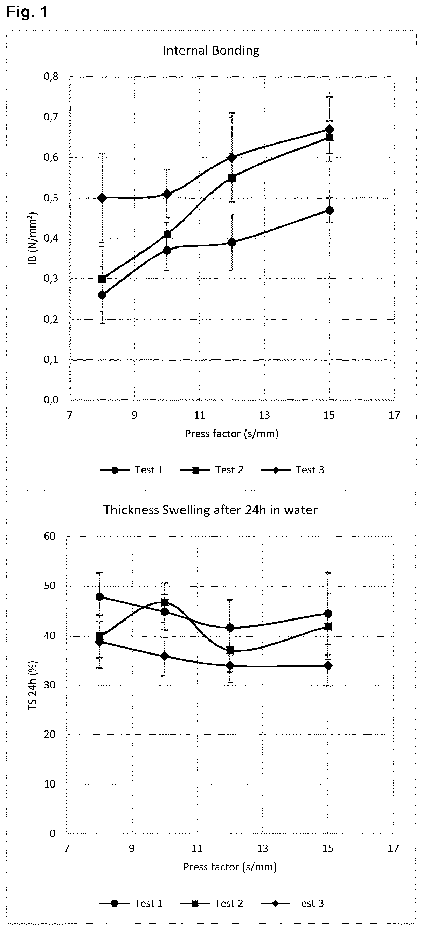

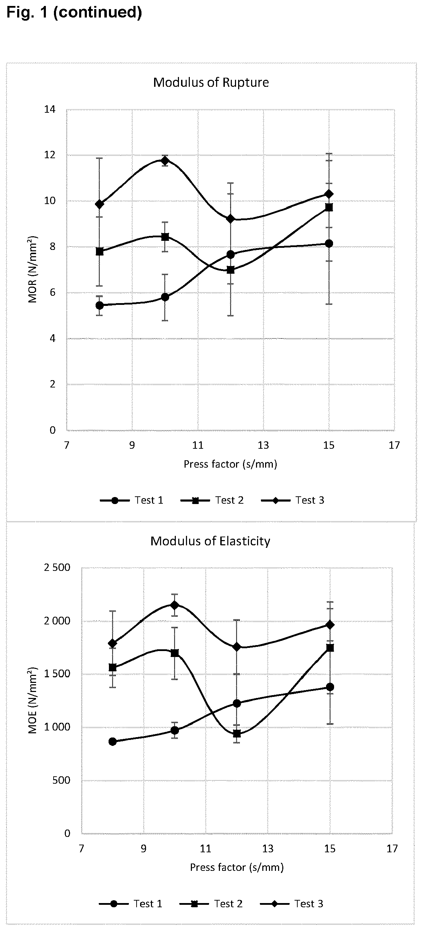

Mechanical characterizations (Internal Bond, Modulus of Rupture, Modulus of Elasticity) and water resistance with Thickness Swelling tests in water of panels from Tests 1, 2 and 3 are shown in Figure 1.

First of all, for the mechanical performances (Internal Bonding, Modulus of Rupture and Modulus of Elasticity), higher is the value, better is the final board. On the contrary, concerning the Thickness Swelling test of boards immerged in water for 24 h, lower is the value, better is the water resistance of the board. As observed for these 4 parameters, a trend can be established for boards of the 3 tests: boards from Test 1 showed the lowest performances whereas, surprisingly, boards from Test 3 had the best performances for press factors of 6 s/mm and 8 s/mm, meaning that the system has a better kinetic of curing. Moreover, wood-based panels from Test 3 were the only panels to reach and exceed the required performances to achieve the P2 standard (EN 312:2010) at a press factor of 10 s/mm. The P2 standard (EN 312:2010) is, for a 12 mm thick panel, IB greater than 0.4 $N/mm^2$, MOR greater than 11.0 $N/mm^2$ and MOE greater than 1800 $N/mm^2$.

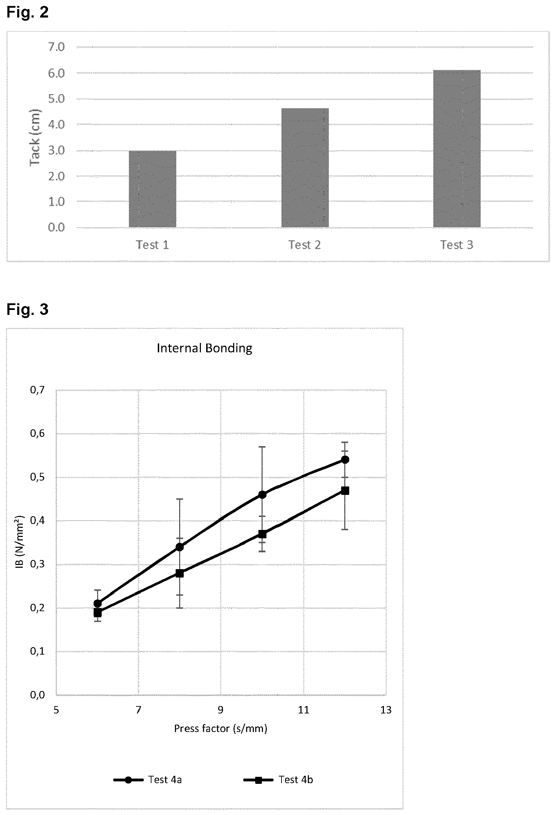

An evaluation of tack on wood particles glued according to Tests 1, 2 and 3 was conducted and results are shown in Figure 2.

The same trend was observed as for the mechanical performances: surprisingly adhesive composition from Test 3 showed the best tack performances whereas adhesive composition from Test 1 had the lowest tack performances. Thus, the 2-step solid and liquid adhesive addition enabled better tack than a process including a drying step.

Another aspect of the two-part adhesive composition as implemented in the present invention is an improvement of the visual sedimentation of ground sunflower meal within the final wood-based panel. Indeed, when processes including a drying step (Tests 1 and 2) were applied to manufacture wood-based panels, a sedimentation phenomenon was observed. It means that a greater amount of ground sunflower meal was observed in the underside of panels than on the upper surface. In the case of Test 3, this phenomenon was slightly observed, and even less when glycerol was added to the adhesive composition (included in crude vegetable glycerin). When glycerol was added (as crude vegetable glycerin), a homogeneous mixture was obtained with increased tack properties.

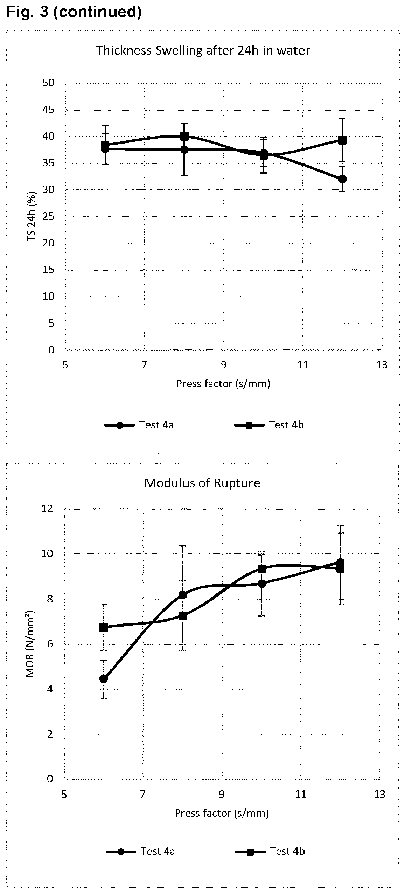

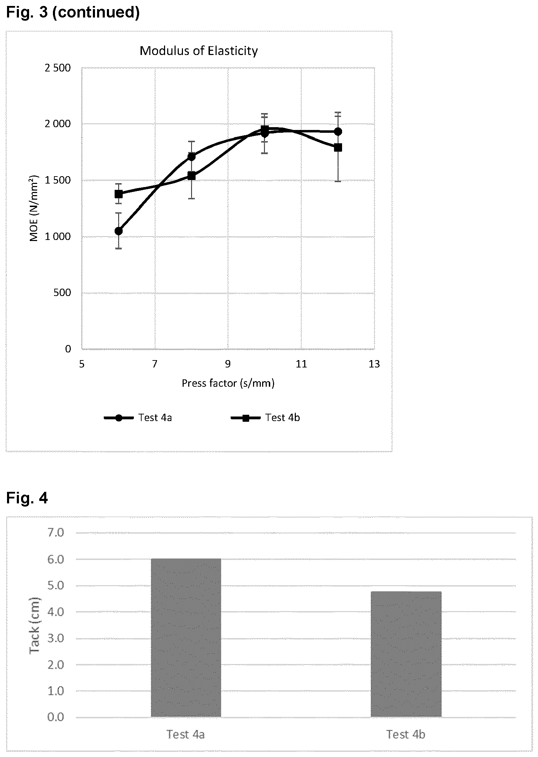

Another studied parameter was the addition order of both the liquid and solid parts, and its influence on board properties. Test 4a consisted in the addition of the liquid part in wood particles in the first step, followed by the solid part addition (it has to be noted that Test 3 and Test 4a are the same tests but carried out at a different time and with different batches of the raw materials ; this explains the variability of the results between the two tests). In Test 4b, the solid part was first added to the wood particles, then the liquid part was added. Mechanical characterizations (Internal Bond, Modulus of Rupture, Modulus of Elasticity) and water resistance with Thickness Swelling tests in water of panels from Tests 4a and 4b are shown in Figure 3.

Concerning the internal bonding test, standard deviations of both Tests 4a and 4b were overlaid on each other, that means no difference can be confirmed. For water resistance test (TS), no difference can be made between Tests 4a and 4b at press factors of 6, 8 and 10 s/mm. At 12 s/mm, a better water resistance is obtained for Test 4a (i.e., lower TS), especially as standard deviations are not overlaid. Flexural tests (MOR and MOE) cannot help decide between Test 4a and 4b. For press factor at 8, 10 and 12 s/mm, values are similar and standard deviations are overlaid. A difference can be observed at 6 s/mm: panels from Test 4b had a better performance, especially as standard deviations are not overlaid. Finally, these results showed that both additional protocols can be processed without clearly impacting final mechanical performances and water resistance of wood particleboards.

An evaluation of tack on wood particles glued according to Examples 4a and 4b was also conducted and results are shown in Figure 4.

Unlike the previous properties, a difference of tack performances can be observed between Tests 4a and 4b. Indeed, a better tack is obtained when the liquid part is added first in the 2-step solid and liquid adhesive addition (Test 4a).

**Examples 6-7: Effect of urea addition in the liquid part of the adhesive composition for preparing a single layer wood particleboard (comparative example)**

The effect of urea was investigated in wood particleboards manufactured at lab scale with two different raw materials as the solid part (micronized sunflower meal). Protocols of adhesive preparation and particleboard process are described below.

In Example 6, the liquid part consisted in a mixture of PAE Soyad™ CA1920 and crude glycerin at a 1:2 ratio (dry content). pH was then adjusted at pH 8 with a NaOH solution concentered at 10 mol/L. The adequate quantity of ground raw material (named the solid part) was also added.

In Example 7, the liquid part consisted in a mixture of PAE Soyad™ CA1920, crude glycerin and urea at a 1:2:2 ratio (dry content). pH was then adjusted at pH 8 with a NaOH solution concentered at 10 mol/L. The adequate quantity of ground raw material (named the solid part) was also added.

The wood particles were placed in a planetary blender (pluton, mineapolis) with a paste impeller and the liquid part of the adhesive preparation was first added to wood particles with a syringe during particles mixing. Then, the solid ground raw material part was introduced mechanically (by hand) in the blender. The mixing step was carried on for 5 min. The humidity of the blend was then measured by using a moisture analyzer (Imal UM2000-LTE).

When a target moisture for wood furnish before pressing was required, water could be added to the wood before or after the adhesive. The adequate value was calculated by considering the targeted value to reach and removing from this calculation the water already adsorbed in the wood and the water contained in the adhesive composition. Standard targeted Mat (impregnated wood before hot pressing) moisture content value is about 12% atro. The real value has been checked after blending by using a moisture analyzer (Imal UM2000-LTE). At the end of this step it was obtained an impregnated wood sample ready to form a lab size particleboard.

A 200 mm x 200 mm x 200 mm wood forming box was filled with impregnated wood (Wood+Adhesive+water) sample weighed to achieve a particleboard with a density of 650 kg/m$^3$ at a thickness of 12 mm (final thickness is obtained thanks to a stainless-steel mold of 12 mm thick). Then, impregnated wood was cold pressed by hand to form a mat. The mat was hot pressed to a thickness of 12 mm for 3 min at a press platen temperature of 180°C at a pressure of 15 metric tons (MeT) using a CARVER hot press (platen of 250 mm x 250 mm). After pressing, thickness and weight of the particleboard samples were measured and recorded. Then the particleboard was placed in a conditioning room at 20°C and 65% r.h. for at least one day. For each adhesive composition, 2 boards were made.

Wood particleboards were manufactured at lab scale with a 2-part (solid and liquid) adhesive addition according to the adhesive compositions shown in Table 5 below.

Table 5

| | Wood particles (g) | Adhesive preparation 1 Liquid part (pH adjusted at 8) | | | Adhesive preparation 2 Solid part | Water added separately (g) |
| --- | --- | --- | --- | --- | --- | --- |
| | | PAE Soyad™ CA1920 (g) | Crude glycerin (g) | Urea (g) | Quantity (g) | |
| Example 6 | 625 | 30.0 | 14.2 | - | 32.0 | 25.8 |
| Example 7 | 625 | 30.0 | 14.2 | 12.4 | 32.0 | 25.8 |

**Results and Discussions**

Urea was added in a two-part adhesive composition consisting of PAE Soyad™ CA1920, crude glycerol and urea in the liquid part, and the sunflower meal solid part (Example 7). The mixture was also formulated without urea addition (Example 6).

Mechanical characterizations (Internal Bond) and water resistance with Thickness Swelling tests in water of panels from these Examples are shown in Table 6 below.

Table 6

| Examples | Internal Bonding (N/mm$^2$) | Thickness Swelling (%) |
| --- | --- | --- |
| Example 6 | 0.44 | 41.90 |
| Example 7 | 0.53 | 42.08 |

Based on these results, it was shown that urea increased internal bonding properties while maintaining the water resistance. In addition, the ammonia release due to urease activity was not present in the mixture of impregnated wood with both adhesive formulations from Examples 6 and 7.

However, after panels were hot-pressed, an ammonia release was noticed from panels from Example 7. This release was probably due to the decomposition of urea into ammonia at temperature over 133°C.

**Examples 8-9 : Effect of urea addition in the liquid part of a 2-part adhesive composition to prepare a 3-layers wood particleboard (according to the invention)**

The effect of urea addition in the liquid part of the adhesive composition for resinating the wood particles forming the core layer of a 3-layers wood particleboard was studied. Urea was not added into the adhesive composition for resinating the wood particles forming the surface layers. The core layer was made up of large word particles, with average particles size between about 0.6 to 5 mm, and representing 60% of the panel in mass. Two surface layers, located respectively on each side of the core layer were made up of smaller particles wood, with average particles size below 1 mm, representing 40% of the panel (which each side representing 20% of the panel).

For Example 8, two batches of wood particles were prepared; one for the core layer with large wood particles, and one for the two surface layers with smaller wood particles. For the core layer batch, the liquid part, consisted in a mixture of PAE Marenyl WPD 20 and distilled vegetable glycerin and was obtained after mixing into a 5 L bucket for 10 min. The pH of the liquid was then adjusted to reach the value of 10 using a NaOH solution (10 mol/L). The adequate quantity of ground sunflower meal (named the solid part) was also prepared. For the surface layers batch, the liquid part, consisted in a mixture of PAE Marenyl WPD 20 and distilled vegetable glycerin and was obtained after mixing into a 5 L bucket for 10 min. The adequate quantity of ground sunflower meal (named the solid part) was also prepared.

For Example 9, two batches of wood particles were prepared; one for the core layer with large wood particles, and one for the two surface layers with smaller wood particles. For the core layer batch, the liquid part, consisted in a mixture of PAE Marenyl WPD 20, distilled vegetable glycerin and urea, and was obtained after mixing into a 5 L bucket for 10 min. The pH of the liquid was then adjusted to reach the value of 10 using a NaOH solution (10 mol/L). The adequate quantity of ground sunflower meal (named the solid part) was also prepared. For the surface layers batch, the liquid part, consisted in a mixture of PAE Marenyl WPD 20 and distilled vegetable glycerin, and was obtained after mixing into a 5 L bucket for 10 min. The adequate quantity of ground sunflower meal (named the solid part) was also prepared.

For all batches of Examples 8 and 9, wood particles were placed in a particle blender (Imal, Lab Glue Blender 300) and the solid ground sunflower meal part was added mechanically (by hand) in the particle blender through an aperture to the wood particles. Then, the liquid part of the adhesive composition was added to wood particles by injection during 3 min using a spray nozzle into the blender during particle mixing. Finally, the required quantity of water to reach the targeted moisture content of the batch was sprayed using a spray nozzle into the blender on wood particles. The mixing step was carried on for 5 min. The moisture content of the blend was then measured by using a moisture analyzer (Imal UM2000-LTE). All quantities for batches preparation of Examples 8 and 9 are presented in the table 7 below.

Table 7: Batches preparations for board manufacturing of Examples 8 and 9

| | Wood particles (g) | Adhesive preparation 1 Solid part | Adhesive preparation 2 Liquid part | | | Water added separately (g) | Moisture content of the blend before pressing (parts ATRO) |
|---|---|---|---|---|---|---|---|
| | | Ground sunflower meal (g) | PAE Marenyl WPD 20 (g) | Urea (g) | Distilled vegetable glycerin (g) | | |
| **Example 8** *Core layer* | 9500 | 460 | 826 | 0 | 277 | 0 | 10.5 |
| **Example 8** *Face layers* | 8000 | 382 | 649 | 0 | 215 | 71 | 12 |
| **Example 9** *Core layer* | 9500 | 460 | 826 | 189 | 277 | 0 | 10.2 |
| **Example 9** *Face layers* | 8000 | 382 | 649 | 0 | 215 | 71 | 12 |

Finally, 715 g of impregnated wood particles of the surface layers batch prepared according to, respectively, Example 8 and 9 were weighted to form the first bottom surface layer and placed in a forming box in order to prepare the mat. Then, 3440 g of impregnated wood particles of the core layer batch prepared according to, respectively, Example 8 and 9 were weighted to form the core layer and added in the forming box above the previous wood particles in order to prepare the mat. Finally, 715 g of impregnated wood particles of the surface layers batch prepared according to, respectively, Example 8 and 9 were weighted to form the second top surface layer and added in the forming box above the previous wood particles in order to prepare the mat. Forming box size was 600 mm x 600 mm x 200 mm to make the mat. The mat was cold pressed by hand. The mat was then placed into a heating press (Imal, Italia, platen of 1000 mm x 1000 mm), pressed to a thickness of 19.5 mm and cured at 210°C. 2 panels were made for each Example with two different press times: 10 and 12 s/mm (i.e., 195 and 234 s). After pressing, thickness and weight of the particleboards were controlled. Then the boards were placed in a conditioning room at 20°C and 65% r.h. for three days. The targeted density of the final board achieves approximately 660 kg/m$^3$.

**Results and Discussions**

Mechanical characterizations (Internal Bond, Modulus of Rupture, Modulus of Elasticity) and water resistance with Thickness Swelling tests after 24h in water of panels from Examples 8 and 9 are shown in Table 8 below.

Table 8: Mechanical performances and water resistance of wood panels of Examples 8 and 9

| | Press Factor (s/mm) | Internal Bonding (N/mm$^2$) | Thickness Swelling after 24h in water (%) | Modulus of Rupture (N/mm$^2$) | Modulus of Elasticity (N/mm$^2$) |
|---|---|---|---|---|---|
| Example 8 | 10 | 0.43 ($\pm$0.05) | 27.0 ($\pm$0.4) | 9.7 ($\pm$0.5) | 1782 ($\pm$39) |
| | 12 | 0.43 ($\pm$0.04) | 28.8 ($\pm$2.3) | 10.8 ($\pm$1.2) | 1886 ($\pm$119) |

(continued)

| | Press Factor (s/mm) | Internal Bonding (N/mm$^2$) | Thickness Swelling after 24h in water (%) | Modulus of Rupture (N/mm$^2$) | Modulus of Elasticity (N/mm$^2$) |
|---|---|---|---|---|---|
| Example 9 | 10 | 0.51 ($\pm$0.02) | 25.2 ($\pm$1.3) | 11.2 ($\pm$1.6) | 1884 ($\pm$261) |
| | 12 | 0.49 ($\pm$0.03) | 28.7 ($\pm$0.6) | 10.4 ($\pm$0.9) | 1844 ($\pm$58) |

Based on these results, it was shown that urea added to the wood particle forming the core layer increased internal bonding properties while maintaining the water resistance and the flexural moduli of wood particleboards, for both press factors. Moreover, no ammonia release was noticed.

## Claims

1. Process for preparing a multi-layer lignocellulosic-based article comprising a core layer and two surface layers, each layer comprising or consisting of lignocellulosic material, comprising:

   i) providing

      i.a) a first two-part adhesive composition having

         - a first liquid part comprising an amine-based azetidinium-functional cross-linker, water, and optionally an amine- or amide-based compound (preferably urea) and/or a diluent (preferably a polyol),
         - a first solid part comprising ground *Helianthus* meal or ground *Brassica* meal or a mixture thereof and optionally an amine- or amide-based compound (preferably urea),

      i.b) a second two-part adhesive composition having

         - a second liquid part comprising an amine-based azetidinium-functional cross-linker, water, and optionally a diluent (preferably a polyol),
         - a second solid part comprising ground *Helianthus* meal or ground *Brassica* meal or a mixture thereof,

   ii) resinating the lignocellulosic material forming the core layer, by adding the first liquid part and the first solid part to a lignocellulosic material, simultaneously or sequentially in any order of addition, to provide a lignocellulosic material impregnated with the first adhesive composition provided that if neither the first liquid part nor the first solid phase comprises an amine- or amide-based compound, an amine- or amide-based compound (preferably urea) is added to the lignocellulosic material during step ii);
   iii) resinating the lignocellulosic material forming the surface layers, by adding the second liquid part and the second solid part to a lignocellulosic material, simultaneously or sequentially in any order of addition, to provide a lignocellulosic material impregnated with the second adhesive composition,
   iv) forming a mat with the lignocellulosic material forming the core layer impregnated with the first adhesive composition and the lignocellulosic material forming the two surface layers impregnated with the second adhesive composition,
   v) curing the adhesive compositions impregnating the lignocellulosic material forming the core layer and the lignocellulosic material forming the surface layers whereby a multi-layer lignocellulosic-based article comprising a core layer and two surface layers is obtained.

2. Process according to claim 1, comprising:

   i) providing

      i.a) a first two-part adhesive composition having

         - a first liquid part comprising an amine-based azetidinium-functional cross-linker, water, and optionally a diluent (preferably a polyol),

- a first solid part comprising ground *Helianthus* meal or ground *Brassica* meal or a mixture thereof, the first liquid part and/or the first solid part further comprising an amine- or amide-based compound (preferably urea),

    i.b) a second two-part adhesive composition having

- a second liquid part comprising an amine-based azetidinium-functional cross-linker, water, and optionally a diluent (preferably a polyol),
- a second solid part comprising ground *Helianthus* meal or ground *Brassica* meal or a mixture thereof,

ii) resinating the lignocellulosic material forming the core layer, by adding the first liquid part and the first solid part to a lignocellulosic material, simultaneously or sequentially in any order of addition, to provide a lignocellulosic material impregnated with the first adhesive composition,

iii) resinating the lignocellulosic material forming the surface layers, by adding the second liquid part and the second solid part to a lignocellulosic material, simultaneously or sequentially in any order of addition, to provide a lignocellulosic material impregnated with the second adhesive composition,

iv) forming a mat with the lignocellulosic material forming the core layer impregnated with the first adhesive composition and the lignocellulosic material forming the two surface layers impregnated with the second adhesive composition,

v) curing the adhesive compositions impregnating the lignocellulosic material forming the core layer and the lignocellulosic material forming the surface layers whereby a multi-layer lignocellulosic-based article comprising a core layer and two surface layers is obtained.

3.    Process according to claim 1 or 2, comprising:

    i) providing

        i.a) a first two-part adhesive composition having

- a first liquid part comprising an amine-based azetidinium-functional cross-linker, water, and optionally a diluent (preferably a polyol),
- a first solid part comprising ground *Helianthus* meal or ground *Brassica* meal or a mixture thereof, the first liquid part and/or the first solid part further comprising an amine- or amide-based compound (preferably urea),

        i.b) a second two-part adhesive composition having

- a second liquid part comprising an amine-based azetidinium-functional cross-linker, water, and optionally a diluent (preferably a polyol),
- a second solid part comprising ground *Helianthus* meal or ground *Brassica* meal or a mixture thereof,

    ii) resinating the lignocellulosic material forming the core layer, by:

        ii.a) adding either the first liquid part or the first solid part to the lignocellulosic material to provide a mixture, then
        ii.b) adding the remaining first liquid part or the remaining first solid part to the mixture to provide a lignocellulosic material impregnated with the first adhesive composition,

    iii) resinating the lignocellulosic material forming the surface layers, by:

        iii.a) adding either the second liquid part or the second solid part to the lignocellulosic material to provide a mixture, then
        ii.b) adding the remaining second liquid part or the remaining second solid part to the mixture to provide a lignocellulosic material impregnated with the second adhesive composition,

    iv) forming a mat comprising the lignocellulosic material forming the core layer impregnated with the first adhesive composition and the lignocellulosic material forming the two surface layers impregnated with the second adhesive composition,

v) curing the adhesive compositions impregnating the lignocellulosic material forming the core layer and the lignocellulosic material forming the surface layers whereby a multi-layer lignocellulosic-based article comprising a core layer and two surface layers is obtained.

4. Process for preparing an article according to any one of claims 1 to 3, wherein, if the second liquid part and/or the second solid part and preferably the second liquid part comprise(s) an amide- or amide-based compound, identical or different to the one present in the first adhesive composition, the content of the amine- or amide-based compound of the first adhesive composition is superior to (preferably at least 1.5 times superior to) the content of amine- or amide-based compound of the second adhesive composition.

5. Process for preparing an article according to any one of claims 1 to 4, wherein the amine-based azetidinium-functional cross-linker is an epichlorohydrin-based cross-linker and preferably is a polyamidoamine-epichlorohydrin (PAE), polyalkylenepolyamine-epichlorohydrin (PAPAE), amine polymer-epichlorohydrin (APE), or a combination thereof.

6. Process for preparing an article according to any one of claims 1 to 5, wherein the amine- or amide-based compound present in the first adhesive composition and optionally in the second adhesive composition has the formula $RNH_2$, $R_2NH$, $RC(O)NH_2$, $R(H)C(O)NH_2$, $R_2NC(O)NH_2$, or $R(H)C(O)N(H)R$, wherein R represents independently for each occurrence H, alkyl, aryl, or aralkyl, preferably urea.

7. Process for preparing an article according to any one of claims 1 to 6, wherein the diluent present in the first liquid part and the one present in the second liquid part, identical or different, are selected from the group consisting of polyols and alcohol-based- or amine-based diluents, preferably both diluents are a polyol, identical or different.

8. Process for preparing an article according to any one of claims 1 to 7, wherein the first adhesive composition and/or the second adhesive composition further comprise(s) at least one additive.

9. Process for preparing an article according to any one of claims 1 to 8, wherein the weight ratio of the amide-based azetidinium-functional cross-linker / lignocellulosic material (dry weight / dry weight) is comprised between 0.2% and 10%.

10. Process for preparing an article according to any one of claims 1 to 9, wherein the weight ratio of diluent / lignocellulosic material (dry weight / dry weight) is comprised between 0.5% and 12%.

11. Process for preparing an article according to any one of claims 1 to 10, wherein the weight ratio of ground *Helianthus* or *Brassica* meal / lignocellulosic material (dry weight / dry weight) is comprised between 0.5% and 20%.

12. Process for preparing an article according to any one of claims 1 to 11, further comprising a pressing step of the lignocellulosic material impregnated with the adhesive compositions.

13. Process for preparing an article according to any one of claims 1 to 12, wherein the lignocellulosic material is wood strands and/or wood particles, preferably wood particles.

14. A multi-layer lignocellulosic-based article, preferably a multi-layer oriented strand board or a multi-layer particleboard, obtained by the process according to any one of claims 1 to 13.

15. A lignocellulosic mat, comprising:

- a core layer comprising a lignocellulosic material, ground *Helianthus* meal and/or ground *Brassica* meal, an amine-based azetidinium-functional cross-linker, water, an amine- or amide-based compound and optionally a diluent and/or an additive,
- two surface layers comprising respectively a lignocellulosic material, ground *Helianthus* meal and/or ground *Brassica* meal, an amine-based azetidinium-functional cross-linker, water, and optionally a diluent and/or an additive, but not comprising an amine- or amide-based compound.

**Fig. 1**

Internal Bonding

Thickness Swelling after 24h in water

# Fig. 1 (continued)

**Modulus of Rupture**

**Modulus of Elasticity**

**Fig. 2**

**Fig. 3**

## Fig. 3 (continued)

Thickness Swelling after 24h in water

Modulus of Rupture

## Fig. 3 (continued)

Modulus of Elasticity

## Fig. 4

Europäisches
Patentamt

European
Patent Office

Office européen
des brevets

# EUROPEAN SEARCH REPORT

Application Number

EP 23 30 5823

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/224482 A1 (BRADY RICHARD L [US] ET AL) 29 August 2013 (2013-08-29) * paragraphs [0021], [0027] – [0029], [0035], [0039], [0045], [0046], [0049] – [0051], [0053]; claims 1,4,5,7–10,14–16,18,20 * ----- | 1–15 | INV. B27N1/00 B27N1/02 B27N3/00 B27N3/02 C08L97/02 C08G73/02 |
| A | WO 2007/064970 A1 (HEARTLAND RESOURCE TECHNOLOGIE [US]; WESCOTT JAMES M [US] ET AL.) 7 June 2007 (2007-06-07) * paragraphs [0017], [0019], [0024], [0025], [0031], [0034], [0035], [0037], [0048], [0053], [0056], [0059], [0073]; claims 1,2,20,22,24,34; example 1 * ----- | 1–15 | ADD. C08K5/053 C08L79/02 C09J189/00 |

TECHNICAL FIELDS
SEARCHED      (IPC)

B27N
C09J
C08L
C08K
C08G

The present search report has been drawn up for all claims

| Place of search | Date of completion of the search | Examiner |
|---|---|---|
| The Hague | 30 December 2023 | Baran, Norbert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 30 5823

This annex lists the patent family members relating to the patent documents cited in the above-mentioned European search report.
The members are as contained in the European Patent Office EDP file on
The European Patent Office is in no way liable for these particulars which are merely given for the purpose of information.

30-12-2023

| Patent document cited in search report | Publication date | Patent family member(s) | | Publication date |
|---|---|---|---|---|
| US 2013224482 A1 | 29-08-2013 | NONE | | |
| WO 2007064970 A1 | 07-06-2007 | US | 2007148339 A1 | 28-06-2007 |
| | | WO | 2007064970 A1 | 07-06-2007 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016141126 A
- WO 2021069689 A
- US 20100233481
- US 20100240806
- US 20100282422
- WO 02070215 A
- US 6713168 B

**Non-patent literature cited in the description**

- Wood-Based Panels: An Introduction for Specialists. Brunel University Press, 2010